(19) Europäisches Patentamt
European Patent Office
Office européen des brevets

(11) EP 0 589 913 B1

(12) EUROPÄISCHE PATENTSCHRIFT

(45) Veröffentlichungstag und Bekanntmachung des Hinweises auf die Patenterteilung:
**10.01.1996 Patentblatt 1996/02**

(21) Anmeldenummer: **92910501.3**

(22) Anmeldetag: **19.05.1992**

(51) Int Cl.[6]: **C09D 151/08**
// (C09D151/08, 133:06)

(86) Internationale Anmeldenummer:
**PCT/EP92/01100**

(87) Internationale Veröffentlichungsnummer:
**WO 92/22615 (23.12.1992 Gazette 1992/32)**

(54) **ÜBERZUGSMITTEL AUF DER BASIS VON CARBOXYLGRUPPENHALTIGEN POLYMEREN UND EPOXIDHARZEN**

COATING BASED ON POLYMERS CONTAINING CARBOXYL GROUPS AND EPOXY RESINS

ENDUITS A BASE DE POLYMERES ET DE RESINES EPOXYDES CONTENANT DES GROUPES CARBOXYLES

(84) Benannte Vertragsstaaten:
**AT BE CH DE DK ES FR GB IT LI NL SE**

(30) Priorität: **17.06.1991 DE 4119857**

(43) Veröffentlichungstag der Anmeldung:
**06.04.1994 Patentblatt 1994/14**

(73) Patentinhaber: **BASF Lacke + Farben AG**
**D-48165 Münster-Hiltrup (DE)**

(72) Erfinder:
- **ENGELKE, Stephan**
  **D-5600 Wuppertal 1 (DE)**
- **BRÜNNEMANN, Michael**
  **D-4400 Münster (DE)**
- **ROTTER, Olaf**
  **D-48165 Münster (DE)**
- **HOLST, Andreas**
  **D-4400 Münster (DE)**

(74) Vertreter: **Münch, Volker, Dr.**
**D-48136 Münster (DE)**

(56) Entgegenhaltungen:
**EP-A- 0 358 153** **DE-A- 3 807 571**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 589 913 B1

## Beschreibung

Gegenstand der vorliegenden Erfindung sind Überzugsmittel, die als Bindemittel mindestens ein carboxylgruppenhaltiges Polymer und als Härter mindestens ein Epoxidharz mit im Mittel mehr als einer Epoxidgruppe pro Molekül enthalten, wobei die Gesamtmenge an Bindemittel plus Härter zwischen 30 und 70 Gew. %, bezogen auf das Gesamtgewicht des Überzugsmittels liegt. Die vorliegende Erfindung betrifft außerdem Verfahren zur Herstellung dieser Überzugsmittel sowie deren Verwendung und Verfahren zum Beschichten von Substraten.

Insbesondere an Überzugsmittel, die im Bereich der Autoreparaturlackierung eingesetzt werden, werden sehr hohe Qualitätsansprüche gestellt. So müssen diese Überzugsmittel bei niedrigen Tempraturen (≤ 100°C, bevorzugt ≤ 80°C) aushärtbar sein und dabei bereits nach weniger als 7 h staubtrocken und klebfrei sein. Ferner ist eine gute Lösemittelbeständigkeit, Witterungsbeständigkeit, Abklebfestigkeit, Vergilbungsbeständigkeit, Schleifbarkeit und niedrige Eigenfarbe der resultierenden Beschichtungen gefordert. Darüber hinaus müssen die Beschichtungen überlackierbar sein, um so zu gewährleisten, daß auch Lackschäden im angrenzenden Bereich und im Bereich der Reparaturlackierung ausgebessert werden können.

Überzugsmittel auf der Basis von carboxylgruppenhaltigen Acrylatcopolymerisaten und Epoxidharzen, die auch für den Bereich der Autoreparaturlackierung verwendet werden, sind seit langem bekannt und beispielsweise in der EP-B-51 275, EP-A-123793, DE-OS 26 35 177, JP-OS 76 338/77, WO 87/02041 und der WO 89/08132 beschrieben. Dies bekannten Überzugsmittel weisen jedoch nur eine geringe Witterungsstabilität und einen niedrigen Oberflächenslip sowie dadurch bedingt eine schlechte Chemikalienfestigkeit der resultierende Beschichtungen auf. Außerdem treten Verträglichkeitsprobleme zwischen den carboxylgruppenhaltige Acrylatcopolymerisaten und einigen Epoxidharzen auf.

Ferner sind aus der EP-A 358153 Überzugsmittel für die Beschichtung von Automobilen bekannt, die ent weder a) ein Copolymer, das unter Verwendung von Polysiloxanmakromonomeren mit mindestens zwei funktionellen Gruppen pro Molekül und von epoxidgruppenhaltigen Vinylmonomeren erhältlich ist, oder b) eine Mischung aus einem Polymer (1) auf der Basis von Polysiloxanmakromonomeren mit mindestens zwei funktionellen Gruppen und einem Polyme (2) auf der Basis von epoxidgruppenhaltigen Vinyl monomeren enthalten. Ferner enthalten diese Überzugsmittel eine Aluminium-Chelatverbindung Zirkon-Chelatverbindung als Härter. Da die funktionellen Gruppen der Polysiloxanmakromonomeren mit zur Vernetzung der Überzugsmittel beitragen, ist ein sehr hoher Anteil dieses Polysiloxanmakromonomers in dem Copolymer erforderlich, um eine ausreichende Vernetzung zu gewährleisten. Eine Vernetzung der Überzugsmittel durch eine Carboxi-Epoxi-Reaktion ist dagegen in der EP-A-358153 nicht beschrieben. Diese aus der EP-A-358153 bekannten feuchtigkeitshärtenden Überzugsmittel weisen ferner den Nachteil einer geringeren Lagerstabilität bei angebrochenen Gebinden sowie höhere Herstellkosten der Überzugsmittel auf.

Weiterhin sind aus der DE-OS 38 39 215 feuchtigkeitshärtende Überzugsmittel bekannt, die als Bindemittel ein Harz enthalten, das erhältlich ist durch Polymerisation eines Alkoxisilan-enthaltenden Vinylmonomeren und/oder eines Polysiloxanmakromonomeren mit einem epoxidgruppenhaltigem Vinylmonomeren in Gegenwart eines carboxylgruppenhaltigen Harzes. Als Härter enthalten diese Überzugsmittel wiederum eine Chelatverbindung.

Weiterhin ist aus der JP-OS 2163177 ein Überzugsmittel auf der Basis von hydroxylgruppenhaltigen Acrylatcopolymerisaten und Polyisocyanaten bekannt, das insbesondere als Bautenanstrichmittel eingesetzt wird. Die Beschichtungen zeichnen sich dabei durch eine verbesserte Witterungsstabilität aus, die durch Einpolymerisieren von 0,5 bis 15 Gew.-% eines Polysiloxanmakromonomers in das hydroxylgruppenhaltige Acrylatcopolymerisat erzielt wird. Auch aus der US-PS 4,754,014 ist es bekannt, die Witterungsbeständigkeit von Überzugsmitteln auf der Basis von hydroxylgruppenhaltigen Acrylatcopolymerisaten durch Modifizierung mit Polysiloxanmakromonomeren zu verbessern. Überzugsmittel auf der Basis von carboxylgruppenhaltigen Acrylatcopolymerisaten und Epoxidharzen sind in der JP-OS 2163177 und der US-PS 4,754,014 jedoch nicht beschrieben.

Aus der EP-B 175 092 ist es bekannt, daß die Verlaufseigenschaften sowie die Gleitfähigkeit und Kratzfestigkeit von Beschichtungen dadurch verbessert werden können, daß den Überzugsmitteln polyethergruppenfreie, polyestermodifizierte Siloxane zugesetzt werden. Der Einsatz von polymerisierbaren, ethylenisch ungesättigten Polysiloxanmakromonomeren zur Modifizierung von Bindemitteln auf der Basis von Acrylatcopolymerisaten ist in der EP-B 175092 nicht beschrieben.

Schließlich sind aus der EP-A-212 457 Überzugsmittel auf der Basis epoxifunktionellen Polymeren und carboxylgruppenhaltigen Polymeren bekannt, die sich insbesondere für die Metallic-Mehrschichtlackierung eignen. Sowohl das epoxidgruppenhaltige Polymer als auch das carboxylgruppenhaltige Polymer können durch den Einsatz von silanfunktionellen Monomeren, wie z.B. γ-Methacryloxipropyltrimethoxisilan oder Mercaptopropyltrimethoxisilan, modifiziert werden. Alternativ können den Überzugsmitteln auch silangruppenhaltige Verbindungen, wie z.B. Methyltrimethoxisilan, direkt zugegeben werden. In der EP-A-212 457 sind aber keine Angaben über geeignete Einsatzmengen der Silankomponenten enthalten. Ferner findet sich auch kein Hinweis auf den Einsatz von Polysiloxanmakromonomeren. Diese aus der EP-A-212 457 bekannten Überzugsmittel weisen nur eine geringe Verbesserung der Oberflächeneigenschaften der resultierenden Beschichtungen, wie z.B. Wasser- und Chemikalienabweisung, auf.

Der vorliegenden Erfindung liegt somit die Aufgabe zugrunde, Überzugsmittel auf der Basis von carboxylgruppenhaltigen Acrylatcopolymerisaten und Epoxidharzen zur Verfügung zu stellen, die zu überlackierbaren Beschichtungen mit einer guten Witterungsbeständigkeit, einer guten Lösemittel- und Chemikalienbeständigkeit sowie einem guten Decklackstand und ausreichender Kratzfestigkeit führen. Um für den Bereich der Autoreparaturlackierung einsetzbar zu sein, sollten die Überzugsmittel ferner bei niedrigen Temperaturen härtbar sein und dabei bereits nach möglichst kurzer Zeit zu staubtrockenen und klebfreien Oberflächen führen. Weiterhin sollten die Überzugsmittel schleifbar sein, eine Überlackierbarkeit auch ohne Anschleifen besitzen und eine gute Abklebfestigkeit und Spritznebelaufnahme haben.

Diese Aufgabe wird überraschenderweise durch ein Überzugsmittel gelöst, das als Bindemittel mindestens ein carboxylgruppenhaltiges Polymer und als Härter mindestens ein Epoxidharz mit im Mittel mehr als einer Epoxidgruppe pro Molekül enthält, wobei die Gesamtmenge an Bindemittel plus Härter zwischen 30 und 70 Gew. %, bezogen auf das Gesamtgewicht des Überzugsmittels, liegt. Das Überzugsmittel ist dadurch gekennzeichnet, daß es

A) mindestens ein carboxylgruppenhaltiges Acrylatcopolymerisat (A) mit einer Säurezahl von 40 bis 150 mg KOH/g, das erhältlich ist durch Lösungspolymerisation von

$a_1$) 0,05 bis 2,5 Gew.% eines oder mehrerer Polysiloxanmakromonomerer $a_1$,

$a_2$) 0 bis 40 Gew. % eines oder mehrerer carboxylgruppenhaltiger, ethylenisch ungesättigter Monomerer,

$a_3$) 0 bis 40 Gew.% eines oder mehrerer vinylaromatischer Kohlenwasserstoffe,

$a_4$) 0 bis 99,95 Gew.% eines oder mehrerer hydroxylgruppenhaltiger, ethylenisch ungesätttigter Monomerer

$a_5$) 0 bis 30 Gew.-% eines oder mehrerer Monomerer mit mindestens zwei polymerisierbaren, ethylenisch ungesättigten Doppelbindungen und

$a_6$) 0 bis 80 Gew.% eines oder mehrerer anderer ethylenisch ungesättigter copolymerisierbarer Monomerer,

wobei die Summe der Gewichtsanteile der Komponenten $a_1$ bis $a_6$ jeweils 100 Gew.% beträgt und wobei die Einsatzmengen der Komponenten $a_2$ und $a_4$ nicht beide gleichzeitig Null sein dürfen und ggf. dieses in der ersten Stufe erhaltene Copolymer - falls es Hydroxylgruppen enthält - mit Carbonsäureanhydriden umgesetzt worden ist, wobei die Menge an eingesetzten Carbonsäureanhydriden so gewählt worden ist, daß das entstehende Copolymer (A) die gewünschte Säurezahl aufweist,
und/oder

B) mindestens ein epoxidgruppenhaltiges Acrylatcopolymerisat (B), das erhältlich ist durch Lösungspolymerisation von

$e_1$) 0,05 bis 2,5 Gew.-% eines oder mehrerer Polysiloxanmakromonomerer $a_1$,

$e_2$) 10 bis 50 Gew.-% eines oder mehrerer epoxidgruppenhaltiger, ethylenisch ungesättigter Monomerer,

$e_3$) 0 bis 40 Gew.-% eines oder mehrerer vinylaromatischer Kohlenwasserstoffe,

$e_4$) 0 bis 30 Gew.-% eines oder mehrerer Monomerer mit mindestens zwei polymerisierbaren, ethylenisch ungesättigten Doppelbindungen und

$e_5$) 0 bis 89,95 Gew.-% eines oder mehrerer ethylenisch ungesättigter copolymerisierbarer Monomerer,

wobei die Summe der Gewichtsanteile der Komponenten $e_1$ bis $e_5$ jeweils 100 Gew.% beträgt,

C) ggf. ein oder mehrere weitere carboxylgruppenhaltige Additions- und/oder Kondensationsharze und

D) ggf. ein oder mehrere weitere Epoxidharze

enthält, wobei $a_1$ ein zahlenmittleres Molekulargewicht von 1000 bis 40000 aufweist, im Mittel 0,5 bis 2,5 ethylenisch ungesättigte Doppelbindungen pro Molekül enthält und

- eine Verbindung, die herstellbar ist durch Umsetzung hydroxyfunktioneller Silane mit Epichlorhydrin und anschließender Umsetzung des Reaktionsprodukts mit (Meth)Acrylsäure und/oder Hydroxyalkylestern der (Meth)Acrlysäure,

- ein Polysiloxanmakromonomer der Formel

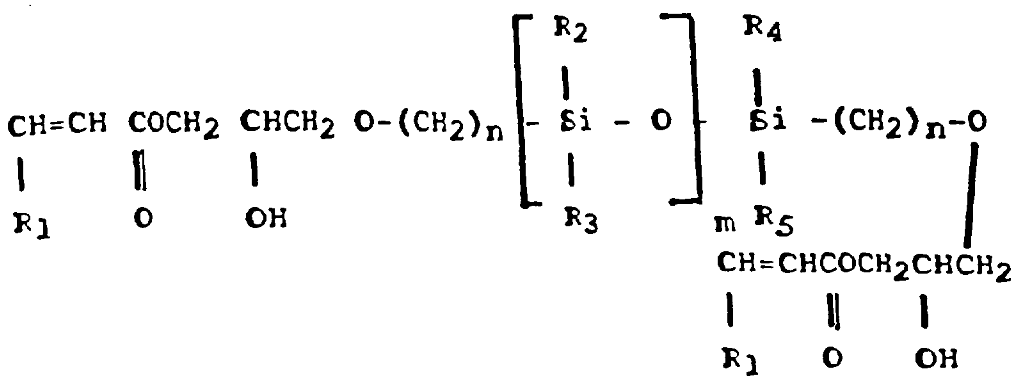

mit
$R_1$ = H oder $CH_3$
$R_2$, $R_3$, $R_4$, $R_5$, = gleiche oder verschiedene aliphatische Kohlenwasserstoffreste mit 1 bis 8 C-Atomen, n = 2 bis 5, m = 8 bis 30, oder

- ein Polysiloxanmakromonomer ist, das hergestellt worden ist durch Umsetzung von 70 bis 99,999 Mol-% einer Verbindung (1), dargestellt durch die Formel (I)

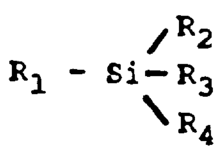

(I)

in welcher $R_1$ eine aliphatische Kohlenwasserstoffgruppe mit 1 bis 8 C-Atomen oder einen Phenylrest darstellt und $R_2$, $R_3$ und $R_4$ jeweils für einen Halogenrest oder einen Alkoxyrest mit 1 bis 4 C-Atomen oder eine Hydroxylgruppe stehen, mit 30 bis 0,001 Mol-% einer Verbindung (2), dargestellt durch die Formel (II)

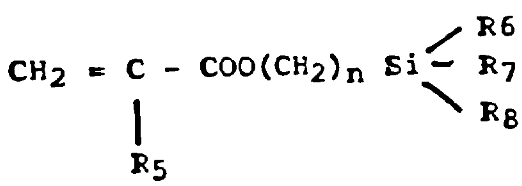

(II)

in welcher $R_5$ ein Wasserstoffatom oder einen Methylrest darstellt, $R_6$, $R_7$ und $R_8$ jeweils für Halogen, OH oder einen Alkoxyrest mit 1 bis 4 C-Atomen oder eine aliphatische Kohlenwasserstoffgruppe mit 1 bis 8 C-Atomen stehen und wobei wenigstens einer der Reste $R_6$, $R_7$ oder $R_8$ Halogen, OH oder eine Alkoxygruppe ist und n eine ganze Zahl von 1 bis 6 darstellt.

Die vorliegende Erfindung betrifft außerdem Verfahren zum Beschichten von Substraten, bei denen diese Überzugsmittel aufgebracht werden und die Verwendung dieser Überzugsmittel für die Autoreparaturlackierung und als Klar- oder Decklack, insbesondere als Klarlack für die Mehrschichtmetallic Lackierung.

Es ist überraschend und war nicht vorhersehbar, daß gerade die erfindungsgemäße Modifizierung von Überzugsmittel auf der Basis carboxylgruppenhaltiger Bindemittel und epoxidgruppenhaltiger Vernetzer durch den Einbau von Polysiloxanmakromonomeren zu Überzugsmitteln führt, die sich durch eine gute Überlackierbarkeit sowie eine gute Witterungs-, Chemikalien- und Lösemittelbeständigkeit der resultierenden Beschichtungen auszeichnen. Vorteilhaft ist ferner eine signifikante Verbesserung der Abklebfestigkeit, der Kratzfestigkeit, der Verspritzbarkeit und des Decklackstandes (DOI).

Es ist erfindungswesentlich, daß die Überzugsmittel entweder mindestens ein mit den Polysiloxanmakromonomeren $a_1$ modifiziertes carboxylgruppenhaltiges Acrylatcopolymerisat (A) oder mindestens ein mit den Polysiloxanmakromonomeren $a_1$ modifiziertes epoxidgruppenhaltiges Acrylatcopolymerisat (B) oder sowohl mindestens ein modifiziertes carboxylgruppenhaltiges Acrylatcopolymerisat (A) als auch mindestens ein modifiziertes epoxidgruppenhaltiges Acrylatcopolymerisat (B) enthalten. Bevorzugt sind Überzugsmittel, die als modifizierte Komponente entweder nur (A) oder nur (B) enthalten. Überzugsmittel, die mindestens ein modifiziertes epxidgruppenhaltiges Acrylatcopolymerisat (B) enthalten, enthalten außerdem als vernetzende Komponente mindestens ein carboxylgruppenhaltiges Kondensations- und/oder Additionsharz. Entsprechend enthalten Überzugsmittel, die mindestens ein modifiziertes carboxylgruppenhaltiges Acrylatcopolymerisat (A) enthalten, außerdem als vernetzende Komponente mindestens ein Epoxidharz. Besonders bevorzugt sind Überzugsmittel, die mindestens ein mit den Polysiloxanmakromonomeren $a_1$ modifiziertes carboxylgruppenhaltiges Acrylatcopolymerisat (A), ggf. weitere carboxylgruppenhaltige Additions- und/oder Kondensationsharze (C) sowie als Vernetzer Epoxidharze (Komponente D), die nicht mit $a_1$ modifiziert sind, enthalten. Insbesondere aufgrund toxikologischer Aspekte werden epoxidgruppenhaltige Acrylatcopolymerisate als Vernetzer nach Möglichkeit nicht verwendet.

Ganz besonders bevorzugt sind Überzugsmittel, die mindestens ein mit den Polysiloxanmakromonomeren $a_1$ modifiziertes carboxylgruppenhaltiges Acrylatcopolymerisat (A), mindestens einen carboxylgruppenhaltigen Polyester (C) und mindestens ein Epoxidharz (D) enthalten.

Im folgenden werden nun zunächst die einzelnen Bestandteile der erfindungsgemäßen Überzugsmittel näher erläutert.

Es ist erfindungswesentlich, daß die Überzugsmittel mindestens ein Acrylatcopolymerisat enthalten, das durch Einbau von einem oder mehreren Polysiloxanmakromonomeren $a_1$ modifiziert wurde. Sowohl für die Modifizierung von carboxylgruppenhaltigen Acrylatcopolymerisaten (A) als auch für die Modifizierung von epoxidgruppenhaltigen Acrylatcopolymerisaten (B) sind Polysiloxanmakromonomere geeignet, die ein zahlenmittleres Molekulargewicht von 1000 bis 40.000 , bevorzugt von 2000 bis 10000 und im Mittel 0,5 bis 2,5 , bevorzugt 0,5 bis 1,5 , ethylenisch ungesättigte Doppelbindungen pro Molekül aufweisen.

Als Komponente $a_1$ geeignet sind beispielsweise Verbindungen, die herstellbar sind durch Umsetzung hydroxifunktioneller Silane mit Epichlorhydrin und anschließender Umsetzung des Reaktionsprodukts mit (Meth)Acrylsäure und/oder Hydroxyalkylestern der (Meth)Acrlysäure.

Bevorzugt werden als Komponente $a_1$ Polysiloxanmakromonomere der folgenden Formel eingesetzt:

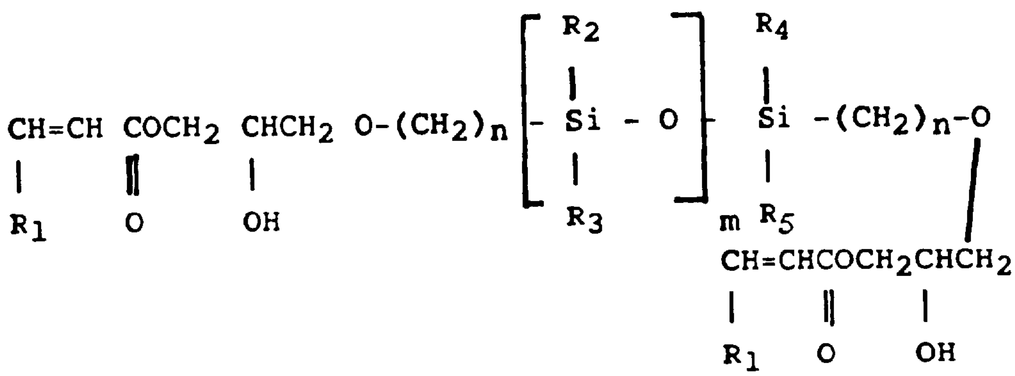

mit

$R_1$ = H oder $CH_3$

$R_2$, $R_3$, $R_4$, $R_5$, = gleiche oder verschiedene aliphatische Kohlenwasserstoffreste mit 1 bis 8 C-Atomen, insbesondere Methyl, oder Phenylrest

n = 2 bis 5, bevorzugt 3

m = 8 bis 30

Besonders bevorzugt wird das $\alpha,\bar{\omega}$-acryloxyorganofunktionelle Polydimethylsiloxan der Formel

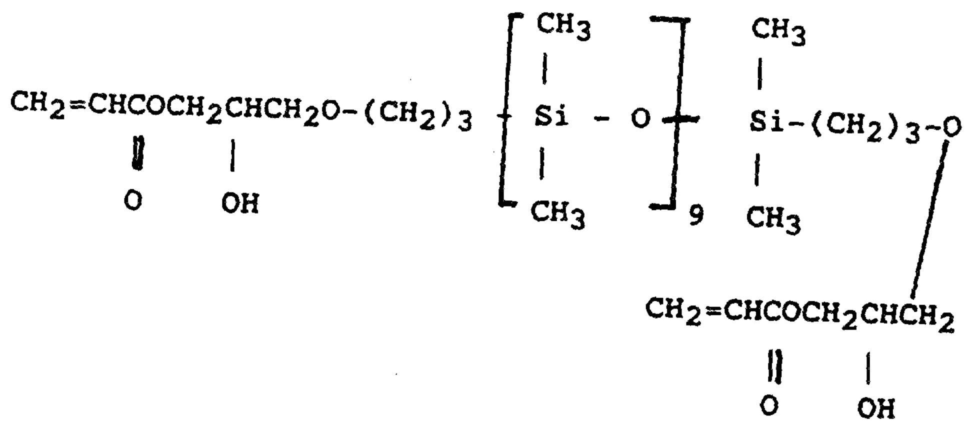

mit n ≈ 9, einem Acryloxiäquivalent von 550 g/Äquivalent, einer OH-Zahl von 102 mgKOH/g und einer Viskosität von 240 mPas (25°C) eingesetzt.

Bevorzugt werden als Komponente $a_1$ auch Polysiloxanmakromonomere eingesetzt, die hergestellt worden sind durch Umsetzung von 70 bis 99,999 Mol-% einer Verbindung (1), dargestellt durch die Formel (I)

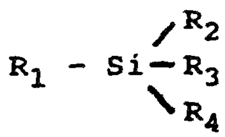 (I)

in welcher $R_1$ eine aliphatische Kohlenwasserstoffgruppe mit 1 bis 8 C-Atomen oder einen Phenylrest darstellt und $R_2$, $R_3$ und $R_4$ jeweils für einen Halogenrest oder einen Alkoxyrest mit 1 bis 4 C-Atomen oder eine Hydroxylgruppe stehen, mit 30 bis 0,001 Mol-% einer Verbindung (2), dargestellt durch die Formel (II)

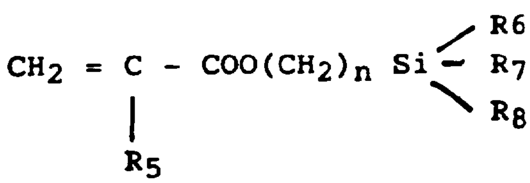 (II)

in welcher $R_5$ ein Wasserstoffatom oder einen Methylrest darstellt, $R_6$, $R_7$ und $R_8$ jeweils für Halogen, OH oder einen Alkoxyrest mit 1 bis 4 C-Atomen oder eine aliphatische Kohlenwasserstoffgruppe mit 1 bis 8 C-Atomen stehen, wobei wenigstens einer der Reste $R_6$, $R_7$ oder $R_8$ OH oder eine Alkoxygruppe ist und n eine ganze Zahl von 1 bis 6 darstellt.

In der Verbindung (1) sind Beispiele für Alkoxigruppen mit 1 bis 4 C-Atomen geradkettige oder verzweigte Gruppen, wie z.B. Methoxy, Ethoxy, Propoxy, Butoxy und dgl. Beispiele für aliphatische Kohlenwasserstoffgruppen sind geradkettige oder verzweigte aliphatische Kohlenwasserstoffgruppen, wie Methyl, Ethyl, Propyl, Butyl, Pentyl, Hexyl, Heptyl, Octyl u.a.

Methyl und Phenyl sind besonders bevorzugt als $R_1$ in der Verbindung (1). Bevorzugt als $R_2$, $R_3$ und $R_4$ sind Methoxi, Ethoxi, Propoxi, Butoxi und Hydroxi. Beispiele für bevorzugte Verbindungen (1) sind Methyltrimethoxysilan, Phenyltrimethoxysilan, Butyltrimethoxysilan, Methyltriethoxysilan, Methyltributoxysilan, Phenyltrisilanol, Methyltrisilanol und dgl., von denen Methyltrimethoxisilan, Phenyltrimethoxisilan und Phenyltrisilanol besonders bevorzugt sind. Diese Verbindungen können allein oder in Kombination verwendet werden.

In der obigen Verbindung (2) steht $R_5$ für ein Wasserstoffatom oder eine Methylgruppe und $R_6$, $R_7$ und $R_8$ repräsentieren jeweils Hydroxy, Alkoxy mit 1 bis 4 Kohlenstoffatomen oder eine aliphatische Kohlenwasserstoffgruppe mit 1 bis 8 Kohlenstoffatomen. n ist eine ganze Zahl von 1 bis 6. $R_6$, $R_7$ und $R_8$ können alle gleich oder verschieden sein oder wenigstens eine dieser Gruppen kann von den anderen verschieden sein. Jedoch ist wenigstens eine dieser Gruppe Hydroxi oder Alkoxy.

In der Verbindung (2) sind Beispiele für aliphatische Kohlenwasserstoffgruppen mit 1 bis 8 Kohlenstoffatomen und Alkoxygruppen mit 1 bis 4 Kohlenstoffatomen diejenigen, die für die Verbindung (1) angeführt wurden. Methoxy, Ethoxy und Hydroxygruppen sind besonders bevorzugt als $R_6$, $R_7$ und $R_8$ und n liegt vorzugsweise im Bereich von 2 bis 4. Beispiele für bevorzugte Verbindungen (2) sind

γ-Acryloxyethyltriethoxisilan,
γ-Methacryloxyethyltriethoxisilan,

γ-Methacryloxypropyltrimethoxisilan,
γ-Methacryloxypropyltriethoxisilan,
γ-Acryloxypropyltrimethoxisilan,
γ-Methacryloxybutyltriethoxisilan,
γ-Acryloxypropyltrisilanol und dgl.

Besonders bevorzugt unter diesen Beispielen sind

γ-Acryloxyethyltriethoxisilan,
γ-Methacryloxyethyltriethoxisilan,
γ-Methacryloxypropyltrimethoxisilan,
γ-Methacryloxypropyltriethoxisilan und
γ-Acryloxypropyltrisilanol.

Diese Verbindungen können einzeln oder in Kombination eingesetzt werden.

Die Reaktion zwischen den Verbindungen (1) und (2) wird bewerkstelligt durch die dehydratisierende Kondensation der Hydroxylgruppen, die in diesen Verbindungen enthalten sind und/oder der Hydroxylgruppen, die auf die Hydrolyse der Alkoxygruppen dieser Verbindungen zurückzuführen sind. In Abhängigkeit von den Reaktionsbedingungen beinhaltet die Umsetzung zusätzlich zu der Dehydratisierungsreaktion eine dealkoholisierende Kondensation. Falls die Verbindungen (1) oder (2) Halogenreste enthalten, wird die Reaktion zwischen (1) und (2) bewerkstelligt durch Dehydrohalogenierung.

Obwohl die Reaktion in Abwesenheit von Lösungsmittel durchgeführt werden kann, ist es wünschenswert, die Reaktion in Wasser und/oder einem organischen Lösungsmittel, in dem beide Verbindungen (1) und (2) löslich sind, durchzuführen. Beispiele für geeignete organische Lösungsmittel sind Kohlenwasserstofflösungsmittel, wie z.B. Heptan, Toluol, Xylol, Octan und Testbenzin, Esterlösungsmittel, wie z.B. Ethylacetat, n-Butylacetat, Isobutylacetat, Methylcellusolveacetat und Butylcarbitolacetat, Ketonlösungsmittel, wie z.B. Methylethylketon, Methylisobutylketon und Diisobutylketon, alkoholische Lösungsmittel, wie z.B. Ethanol, Isopropanol, n-Butanol, sec-Butanol und Isobutanol, Etherlösungsmittel, wie z.B. n-Butylether, Dioxan, Ethylenglykolmonomethylether und Ethylenglykolmonoethylether und dgl. Diese Lösungsmittel können einzeln oder in Kombination verwendet werden.

Wenn die Verbindungen (1) und (2) in Form einer Lösung verwendet werden, beträgt die Gesamtkonzentration dieser Verbindungen in der Lösung geeigneterweise wenigstens 5 Gew.-%.

Die Verbindungen (1) und (2) werden in geeigneter Weise bei Temperaturen von ungefähr 20 bis ungefähr 180°C, vorzugsweise ungefähr 50 bis ungefähr 120°C, umgesetzt. Die Umsetzungsdauer beträgt geeigneterweise gewöhnlich ungefähr 1 bis ungefähr 40 Stunden.

Gegebenenfalls kann die Umsetzung in Anwesenheit eines Polymerisationsinhibitors durchgeführt werden, der die Polymerisationsreaktion aufgrund von ungesättigten Bindungen in der Verbindung (2) effektiv verhindert. Beispiele für geeignete Inhibitoren sind Hydrochinon, Hydrochinonmonomethylether und ähnliche Chinonverbindungen. Das Reaktionssystem der Verbindungen (1) und (2) für die Herstellung des Polysiloxan-Macromonomeren kann Tetraalkoxisilan, Dialkyldialkoxisilan oder dgl., welche in einer Menge von bis zu ungefähr 20 Mol-%, bezogen auf das Gesamtgewicht der Verbindungen (1) und (2), eingesetzt werden, enthalten. Wenn $R_2$, $R_3$, $R_4$, $R_6$, $R_7$ und $R_8$ in den Verbindungen (1) und (2) alle für Hydroxi stehen, ist es wünschenswert, die Reaktion in einem organischen Lösungsmittel unter Erhitzen und Rühren zwecks dehydratisierender Kondensation durchzuführen. Wenn weiterhin wenigstens eine der Verbindungen (1) und (2) an Si gebundene Alkoxigruppen aufweist, ist es bevorzugt, vor der Kondensation eine Hydrolyse durchzuführen. Die Durchführung der Hydrolyse wird erforderlich, wenn alle Gruppen $R_2$, $R_3$, $R_4$, $R_6$, $R_7$ und $R_8$ Alkoxygruppen sind. Die Hydrolysereaktion und die Kondensationsreaktion können kontinuierlich in Anwesenheit von Wasser und einem Katalysator unter Erhitzen und Rühren durchgeführt werden. Die Wassermenge, die für diese Reaktion verwendet wird, liegt, obwohl sie nicht besonders begrenzt ist, vorzugsweise bei wenigstens ungefähr 0,1 Mol pro Mol Alkoxy. Bei Anwesenheit von weniger als 0,1 Mol Wasser tendieren die beiden Verbindungen dazu, weniger reaktiv zu werden. Besonders bevorzugt wird die Verwendung eines großen Wasserüberschusses. In dem Falle, in dem die Kondensationsreaktion einen Alkohol liefert, der in Wasser schwer löslich ist, dient die Verwendung einer Kombination aus Wasser und einem wasserlöslichen organischen Lösungsmittel dazu, das Reaktionssystem einheitlich zu machen. Bevorzugt für die Verwendung als wasserlösliches organisches Lösungsmittel sind die obenerwähnten alkoholischen Ester-, Ether- und Ketonlösungsmittel. Saure oder alkalische Katalysatoren können als Katalysatoren für die Hydrolysereaktion eingesetzt werden. Beispiele für geeignete saure Katalysatoren sind Salzsäure, Schwefelsäure, Phosphorsäure, Ameisensäure, Essigsäure, Propionsäure, Acrylsäure, Methacrylsäure und dgl.

Beispiele für geeignete alkalische Katalysatoren sind Natriumhydroxid, Triethylamin, Ammoniak und dgl. Es ist vorteilhaft, den Katalysator in einer Menge von ungefähr 0,0001 bis ungefähr 5 Gew.-%, vorzugsweise ungefähr 0,01 bis ungefähr 0,2 Gew.-%, bezogen auf die Gesamtmenge der Verbindungen (1) und (2), einzusetzen.

Die Einsatzmenge des oder der Polysiloxanmakromonomere $a_1$ zur Modifizierung des carboxylgruppenhaltigen Acrylatcopolymerisats (A) beträgt weniger als 5 Gew.-%, bevorzugt 0,05 bis 2,5 Gew.-%, besonders bevorzugt weniger als 1 Gew.-% und ganz besonders bevorzugt 0,05 bis 0,5 Gew.-%, jeweils bezogen auf das Gesamtgewicht der zur Herstellung des Copolymerisats (A) ingesamt eingesetzten Monomeren (einschließlich $a_1$).

Die Einsatzmenge des oder der Polysiloxanmakromonomeren $a_1$ zur Modifizierung des epoxidgruppenhaltigen Acrylatcopolymerisats (B) beträgt weniger als 5 Gew.-%, bevorzugt 0,05 bis 2,5 Gew.-%, besonders bevorzugt weniger als 1 Gew.-% und ganz besonders bevorzugt 0,05 bis weniger als 0,5 Gew.-%, jeweils bezogen auf das Gesamtgewicht der zur Herstellung des Copolymerisats (B) insgesamt eingesetzten Monomeren (einschließlich $a_1$).

Dabei hat ein steigender Anteil von Polysiloxanmakromonomer bzw. -monomeren $a_1$ eine Abnahme der Überlakkierbarkeit der resultierenden Beschichtungen, das Auftreten von Verlaufsstörungen sowie eine Trübung der Acrylatcopolymerisatlösung und der daraus hergestellten Überzugsmittel sowie eine Silikonisierung der Spritzanlage und damit Probleme beim Lackwechsel zur Folge.

Der jeweils günstigste Anteil von Polysiloxanmakromonomer(en) hängt daher von den gewünschten Eigenschaften der Beschichtungen und damit vom Anwendungszweck ab. Die für den jeweiligen Anwendungszweck günstigste Einsatzmenge kann aber anhand weniger Versuche leicht ermittelt werden.

Die erfindungsgemäß eingesetzten Acrylatcopolymerisate (A) mit einer Säurezahl von 40 bis 150 mg KOH/g sind erhältlich durch Lösungspolymerisation von

$a_1$) 0,05 bis 2,5 Gew.-%, bevorzugt 0,05 bis 0,5 Gew.-%, eines oder mehrerer Polysiloxanmakromonomerer $a_1$,

$a_2$) 0 bis 40 Gew.-%, bevorzugt 0 bis 30 Gew.-%, eines oder mehrerer carboxylgruppenhaltiger, ethylenisch ungesättigter Monomerer,

$a_3$) 0 bis 40 Gew.-%, bevorzugt 0 bis 30 Gew.-%, eines oder mehrerer vinylaromatischer Kohlenwasserstoffe,

$a_4$) 0 bis 99,95 Gew.-%, bevorzugt 20 bis 60 Gew.-%, eines oder mehrerer hydroxylgruppenhaltiger, ethylenisch ungesättigter Monomerer,

$a_5$) 0 bis 30 Gew.-%, bevorzugt 0 bis 20 Gew.-%, eines oder mehrerer Monomerer mit mindestens zwei polymerisierbaren, ethylenisch ungesättigten Doppelbindungen und

$a_6$) 0 bis 80 Gew.-% eines oder mehrerer anderer ethylenisch ungesättigter copolymerisierbarer Monomerer,

wobei die Summe der Gewichtsteile der Komponenten $a_1$ bis $a_6$ jeweils 100 Gew.-% beträgt und wobei die Einsatzmengen der Komponenten $a_2$ und $a_4$ nicht beide gleichzeitig Null sein dürfen.

Falls dieses so hergestellte Copolymerisat Hydroxylgruppen enthält, kann es ggf. in einer weiteren Stufe mit Carbonsäureanhydriden umgesetzt werden, wobei die Menge an eingesetzten Carbonsäureanhydriden so gewählt wird, daß das entstehende Copolymerisat (A) die gewünschte Säurezahl aufweist.

Die als Komponente $a_1$ geeigneten Verbindungen sind die bereits obenbeschriebenen Polysiloxanmakromonomere.

Beispiele für geeignete carboxylgruppenhaltige Monomere $a_2$ sind ungesättigte Carbonsäuren, wie z.B. Acryl-, Methacryl-, Itacon-, Croton-, Isocroton-, Aconit-, Malein- und Fumarsäure, Halbester der Malein- und Fumarsäure sowie β-carboxiethylacrylat und Addukte von Hydroxialkylestern der Acrylsäure und/oder Methacrylsäure mit Carbonsäureanhydriden wie z.B. der Phthalsäure-mono-2-methacryloyloxiethylester. Die Mengen der Komponente $a_2$ beträgt 0 bis 40 Gew.-%, bevorzugt 0 bis 30 Gew.-%.

Die Komponente $a_3$ ist eine monovinylaromatische Verbindung. Vorzugsweise enthält sie 8 bis 9 Kohlenstoffatome je Molekül. Beispiele für geeignete Verbindungen sind Styrol, Vinyltoluole, α-Methylstyrol, Chlorstyrole, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt. Die Menge an der Komponente $a_3$ beträgt 0 bis 40 Gew.-%, bevorzugt 0 bis 30 Gew.-%.

Als Komponente $a_4$ kommen Hydroxyalkylester α,β-ungesättigter Carbonsäuren mit primären oder sekundären Hydroxylgruppen in Frage. Vorwiegend werden Hydroxyalkylester mit primären Hydroxylgruppen eingesetzt, da sie in der polymeranalogen Reaktion mit dem Carbonsäureanhydrid eine höhere Reaktivität aufweisen. Selbstverständlich können auch Mischungen von Hydroxyalkylestern mit primären Hydroxylgruppen und Hydroxyalkylester mit sekundären Hydroxylgruppen verwendet werden, beispielsweise wenn man Hydroxylgruppen im carboxylgruppenhaltigen Copolymer benötigt, z.B. für die Einstellung der Verträglichkeit des carboxylgruppenhaltigen Copolymers.

Beispiele für geeignete Hydroxyalkylester α,β ungesättigter Carbonsäuren mit primären Hydroxylgruppen sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxialkylester mit einer sekundären Hydroxylgruppe seien 2-Hydroxypropylacrylat, 2-Hydroxybutylacrylat, 3-Hydroxybutyacrylat und die entsprechenden Methacrylate genannt.

Selbstverständlich können jeweils auch die entsprechenden Ester anderer, α,β-ungesättigter Carbonsäuren, wie z.B. der Crotonsäure und der Isocrotonsäure eingesetzt werden.

Vorteilhafterweise kann die Komponente $a_4$ zumindest teilweise ein Umsetzungsprodukt aus einem Mol Hydroxyethylacrylat und/oder Hydroxyethylmethacrylat und durchschnittlich zwei Mol ε-caprolacton sein.

Als Komponente $a_5$ können vorteilhaft Verbindungen der allgemeinen Formel

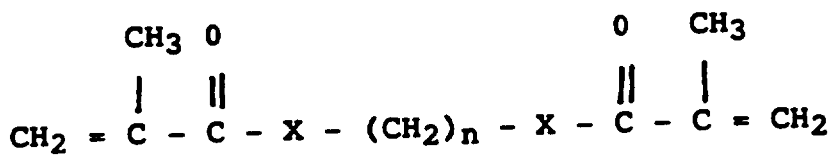

in der bedeuten:
X = 0, NR', S mit R = H, Alkyl, Aryl
n = 2 bis 8
verwendet werden.

Die Komponente $a_5$ kann ein Umsetzungsprodukt mit einer polymerisierbaren, olefinisch ungesättigten Doppelbindung, wobei Acrylsäure ausgeschlossen ist, und Glycidylmethacrylat sein. Weiterhin kommen mit einem ungesättigten, eine polymerisierbare Doppelbindung enthaltenden Alkohol veresterte gesättigte und/oder ungesättigte Polycarbonsäuren oder mit einem ungesättigten, eine polymerisierbare Doppelbindung enthaltenden Alkohol veresterte ungesättigte Monocarbonsäuren mit Ausnahme von Derivaten der Acrylsäure in Frage. Vorteilhafterweise werden die Komponenten $a_5$ ausgewählt aus Produkten, die hergestellt werden aus Polyisocyanaten mit ungesättigten, polymerisierbare Doppelbindungen enthaltenden Alkoholen oder Aminen, wie z.B. das Umsetzungsprodukt von 1 Mol Hexamethylendiisocyanat mit 2 Molen Allylalkohol. Weiterhin kommen Diester von Polyethylenglykol und/oder Polypropylenglykol mit einem mittleren Molekulargewicht von weniger als 1500, bevorzugt weniger als 1000, und (Meth)acrylsäure in Frage.

Beispiele für mehrfach ethylenisch ungesättigte Verbindungen sind Hexandioldimethacrylat, Glykoldimethacrylat, Butandioldimethacrylat, Trimethylolpropantrimethacrylat, Divinylbenzol und ähnliche Verbindungen.

Zum Aufbau des carboxylgruppenhaltigen Copolymerisats (A) können ggf. auch andere, ethylenisch ungesättigte copolymerisierbare Monomere $a_6$ eingesetzt werden. Bei der Auswahl dieser Monomeren ist darauf zu achten, daß der Einbau dieser Monomeren $a_6$ nicht zu unerwünschten Eigenschaften des Copolymerisats führt. So richtet sich die Auswahl der Komponente $a_6$ weitgehend nach den gewünschten Eigenschaften der härtbaren Zusammensetzung in bezug auf Elastizität, Härte, Verträglichkeit und Polarität. Bevorzugt beträgt der Ge-halt an epoxidgruppenhaltigen Monomeren weniger als 2 Gew.-%, bezogen auf das Gewicht der Monomermischung. Besonders bevorzugt ist das Copolymerisat (A) im wesentlichen epoxidgruppenfrei (< 0,1 Gew.-%).

Bevorzugt werden als Komponente $a_6$ Alkylester von olefinisch ungesättigten Carbonsäuren eingesetzt. Beispiele hierfür sind Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Octadecenyl(meth)acrylat sowie die entsprechenden Ester der Malein-, Fumar-, Tetrahydrophthal-, Croton-, Isocroton-, Vinylessig- und Itaconsäure.

Geeignet als Komponente $a_6$ sind weiterhin andere ethylenisch ungesättigte Verbindungen, wie bei spielsweise Alkoxyethylacrylate, Aryloxyethylacrylate und die entsprechenden Methacrylate, wie z.B. Butoxyethyl(meth)acrylat, Phenoxiethyl(meth)acrylat; ungesättigte Verbindungen mit tertiären Aminogruppen, wie z.B. N,N'-Diethylaminoethylmethacrylat, 2-Vinylpyridin, 4-Vinylpyridin, Vinylpyrrolin, Vinylchinolin, Vinylisochinolin, N,N'-Dimethylaminoethylvinylether und 2-Methyl-5-vinylpyridin; Verbindungen wie z.B. Acrylnitril, Methacrylnitril, Acrolein und Methacrolein.

Als Komponente $a_6$ geeignet sind auch Vinylester von Monocarbonsäuren, bevorzugt Vinylester von in α-Stellung verzweigten Monocarbonsäuren mit 5 bis 15 C-Atomen je Molekül. Die verzweigten Monocarbonsäuren können erhalten werden durch Umsetzen von Ameisensäure oder Kohlenmonoxid und Wasser mit Olefinen in Anwesenheit eines flüssigen, stark sauren Katalysators; die Olefine können Crackprodukte von paraffinischen Kohlenwasserstoffen, wie Mineralölfraktionen sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppe vorwiegend an einem quaternären Kohlenstoffatom sitzt. Andere olefinische Ausgangsstoffe sind z.B. Propylentrimer, Propylentetramer und Diisobutylen. Die Vinylester können auch auf an sich bekannte Weise aus den Säuren hergestellt werden, z.B. indem man die Säuren mit Acetylen reagieren läßt.

Besonders bevorzugt werden - wegen der guten Verfügbarkeit - Vinylester von gesättigten aliphatischen Monocarbonsäuren mit 9 - 11 C-Atomen, die am α -C-Atom verzweigt sind. Besonders bevorzugt ist außerdem der Vinylester der p-Tertiärbutylbenzoesäure. Beispiele für weitere, geeignete Vinylester sind Vinylacetat und Vinylpropionat.

Die erfindungsgemäß eingesetzten epoxidgruppenhaltigen Acrylatcopolymerisate (B) sind erhältlich durch Lösungspolymerisation von

$e_1$) 0,05 bis 2,5 Gew.-%, bevorzugt 0,05 bis weniger als 0,5 Gew.-%, eines oder mehrerer Polysiloxanmakromonomerer $a_1$,

$e_2$) 10 bis 50 Gew.-%, bevorzugt 15 bis 35 Gew.-%, eines oder mehrerer epoxidgruppenhaltiger, ethylenisch ungesättigter Monomerer,

$e_3$) 0 bis 40 Gew.-%, bevorzugt 0 bis 30 Gew.-%, eines oder mehrerer vinylaromatischer Kohlenwasserstoffe,

$e_4$) 0 bis 30 Gew.-%, bevorzugt 0 bis 20 Gew.-%, eines oder mehrerer Monomerer mit mindestens zwei polymerisierbaren, ethylenisch ungesättigten Doppelbindungen und

$e_5$) 0 bis 89,95 Gew.-% eines oder mehrerer ethylenisch ungesättigter copolymerisierbarer Monomerer,

wobei die Summe der Gewichtsteile der Komponenten $e_1$ bis $e_5$ jeweils 100 Gew.-% beträgt.

Beispiele für geeignete Monomere sind die bereits bei der Beschreibung des Copolymerisats (A) genannten Verbindungen.

Die Copolymerisate (A) und (B) sind erhältlich durch Lösungspolymerisation der Monomeren. Die Polymerisation wird vorzugsweise unter Ausschluß von Sauerstoff, z.B. durch Arbeiten in einer Stickstoff-Atmosphäre, durchgeführt. Der Reaktor ist mit entsprechenden Rühr-, Heiz- und Kühleinrichtungen sowie mit einem Rückflußkühler, in dem flüchtige Bestandteile, wie z.B. Styrol, zurückgehalten werden, ausgerüstet.

Die Polymerisationsreaktion wird bevorzugt bei Temperaturen von 90 bis 160°C, besonders bevorzugt 110 bis 140°C, unter Verwendung von Polymerisationsinitiatoren und ggf. Polymerisationsreglern durchgeführt.

Geeignete radikalische Initiatoren sind organische Peroxide, wie z.B. Dibenzoylperoxid, Dicumylperoxid, Cumolhydroperoxid, Di-tert.-butylperoxid, tert.-Butylamylperoxid, tert.-Butylhydroperoxid, 2,2-Di-tert.-butylperoxibutan, tert.-Amylperbenzoat, 1,3-Bis(tert.-butylperoxiisopropyl)benzol, Diisopropylbenzolmonohydroperoxid und Diacylperoxide, wie z.B. Diacetylperoxid, Peroxiketale, wie z.B. 2,2-Di-(tert.-amylperoxi)-propan und Ethyl-3,3-di-(tert.-amylperoxi) -butyrat, thermolabile hochsubstituierte Ethanderivate, beispielsweise auf Basis silyl-substituierter Ethanderivate und auf Basis Benzpinakol. Weiterhin können auch aliphatische Azoverbindungen, wie beispielsweise Azobiscyclohexannitril, eingesetzt werden.

Die Initiatormenge beträgt in den meisten Fällen 0,1 bis 5 Gew.-%, bezogen auf die zu verarbeitende Monomerenmenge, sie kann ggf. aber auch höher liegen. Üblicherweise wird der Initiator, gelöst in einem Teil des für die Polymerisation eingesetzten Lösungsmittels, allmählich während der Polymerisationsreaktion zudosiert. Bevorzugt dauert der Initiatorzulauf etwa 1 bis 2 Stunden länger als der Monomerenzulauf, um so auch eine gute Wirkung während der Nachpolymerisationsphase zu erzielen. Werden Initiatoren mit nur einer geringen Zerfallrate, d.h. lange Halbwertszeit unter den vorliegenden Reaktionsbedingungen eingesetzt, so ist es auch möglich, den Initiator vorzulegen.

Bevorzugt wird die Reaktion in Gegenwart von Polymerisationsreglern durchgeführt, da so Trübungen der Polymerlösungen besser vermieden werden können. Als Regler eignen sich vorzugsweise Mercaptoverbindungen, wobei besonders bevorzugt Mercaptoethanol eingesetzt wird. Andere mögliche Regler sind beispielsweise Alkylmercaptane, wie z.B. t-Dodecylmercaptan, Octylmercaptan, Phenylmercaptan, Octyldecylmercaptan, Butylmercaptan, Thiocarbonsäuren, wie etwa Thioessigsäure oder Thiomilchsäure.

Diese Regel werden in einer Menge von bis zu 2 Gew.-%, bezogen auf die zu verarbeitende Monomerenmenge, eingesetzt. Vorzugsweise werden sie in einem der Monomerenzuläufe gelöst und mit den Monomeren zugegeben. Bevorzugt ist die zugegebene Reglermenge zeitlich konstant.

Die Polymerisation wird in einem organischen, gegenüber den eingesetzten Monomeren und ggf. gegenüber Carbonsäureanhydriden inerten, Lösemittel durchführt. Bevorzugt liegt der Polymerisationsfestkörper bei mindestens 50 Gew.-%, besonders bevorzugt zwischen 60 und 75 Gew.-%, bezogen auf das Gesamtgewicht der Reaktionsmischung. Beispiele für geeignete Lösemittel sind handelsübliche alkylierte aromatische Kohlenwasserstoffe bzw. Gemische mit einem Siedebereich von 150 bis 220°C, Xylol und andere aromatische Kohlenwasserstoffe, Ester, wie z.B. Butylacetat, Butylglykolacetat, Ethylethoxipropionat u.ä. sowie aliphatische Kohlenwasserstoffe u.ä.

Bevorzugt wird die Copolymerisation der Monomerkomponenten folgendermaßen durchgeführt:

In dem Reaktor werden zunächst mindestens 10 Gew.-%, bevorzugt 100 Gew.-%, der insgesamt einzusetzenden Menge der Komponente $a_1$ zusammen mit einem Teil der insgesamt einzusetzenden Lösungsmittelmenge vorgelegt und auf die jeweilige Reaktionstemperatur aufgeheizt. Die restliche Menge des Lösungsmittels wird - wie bereits beschrieben - vorzugsweise zusammen mit dem Katalysator allmählich zugefügt. Die ggf. noch vorhandene restliche Menge der Komponente $a_1$ sowie die übrigen Monomeren (Komponenten $a_2$ bis $a_6$) werden zudosiert.

Wenn zur Herstellung des Acrylatcopolymerisats (A) bzw. (B) Vinylester-Monomere eingesetzt werden, so werden bevorzugt mindestens 60 Gew.-%, besonders bevorzugt 100 Gew.-% der Gesamtmenge des Vinylesters ebenfalls in die Vorlage gegeben.

Dieses spezielle Polymerisationsverfahren fördert, wie angenommen wird, die Copolymerisation und reduziert die Homopolymerisation der Einzelkomponenten. Zusätzlich werden Copolymerisate mit einem sehr niedrigen Restmonomerengehalt erhalten, die klare Lösungen mit einem hohen Festkörpergehalt ergeben.

Die erfindungsgemäß eingesetzten Copolymerisate (A) weisen bevorzugt ein zahlenmittleres Molekulargewicht von 5000 bis 25000 auf. Das carboxylgruppenhaltige Acrylatcopolymerisat (A) weist üblicherweise eine Säurezahl von 40 bis 150 mgKOH/g, bevorzugt von 60 bis 120 mgKOH/g, auf. Das Copolymerisat (A) kann außerdem noch Hydroxylgruppen und/oder tertiäre Aminogruppen enthalten. Bevorzugte Acrylatcopolymerisate (A) weisen eine Aminzahl von 0 bis 100 mgKOH/g, bevorzugt von 10 bis 70 mgKOH/g, und eine OH-Zahl von 0 bis 110 mgKOH/g, bevorzugt von 20 bis 90 mgKOH/g, auf.

Die zur Härtung der überzugsmittel erforderlichen Carboxylgruppen können zumindest teilweise durch Verwendung von carboxylgruppenhaltigen Monomeren beim Aufbau der Acrylatcopolymerisate (A) eingeführt werden. Es ist aber auch möglich, zumindest einen Teil der Carboxylgruppen des Copolymers durch Addition von Carbonsäureanhydriden an hydroxylgruppenhaltige Copolymere einzuführen.

Die für die Reaktion mit den Carbonsäureanhydriden eingesetzten Copolymerisate weisen dabei üblicherweise eine OH-Zahl von 40 bis 250 mgKOH/g, bevorzugt von 80 bis 140 mgKOH/g, auf.

Für die Addition an die hydroxylgruppenhaltigen Copolymeren geeignete Carbonsäureanhydride sind die Anhydride von aliphatischen, cycloaliphatischen und aromatischen gesättigten und/oder ungesättigten Di- und Polycarbonsäuren wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyromellithsäure sowie deren halogenierte oder alkylierte Derivate.

Bevorzugt eingesetzt werden Anhydride der Phthalsäure, Tetrahydro- und Hexahydrophthalsäure sowie 5-Methylhexahydrophthalsäureanhydrid.

Die Umsetzung der hydroxylgruppenhaltigen Copolymeren mit den Carbonsäureanhydriden erfolgt bei Temperaturen von 100 bis 140°C in Gegenwart eines Katalysators, wie beispielsweise tertiären Aminen.

Enthalten die hydroxylgruppenhaltigen Copolymerisate dagegen tertiäre Aminogruppen - beispielsweise durch Verwendung von Monomeren mit tertiären Aminogruppen oder durch vorangegangene Umsetzung der hydroxylgruppenhaltigen Copolymerisate mit Verbindungen V, die pro Molekül durchschnittlich 0,8 bis 1,5, vorzugsweise 1, freie Isocyanatgruppe und mindestens 1 tertiäre Aminogruppe enthalten -, so kann auf einen Katalysator verzichtet werden, und die Reaktion kann bei niedrigen Temperaturen von 50 bis 130°C durchgeführt werden.

Besonders vorteilhaft ist es, wenn in das carboxylgruppenhaltige Copolymer tertiäre Aminogruppen eingebaut werden, da sie eine nachfolgende Vernetzung des Carboxylgruppen enthaltenden Polymerisats mit Epoxidgruppen katalysieren und so die Einbrenntemperaturen von Beschichtungsmitteln auf Basis dieser Polymerisate erniedrigt werden.

Enthält das Copolymer tertiäre Aminogruppen, muß bei der Addition von ungesättigten Carbonsäureanhydriden, wie z.B. bei der Addition von Maleinsäureanhydrid, darauf geachtet werden, daß keine Lösungsmittel eingesetzt werden, die unter Katalyse der tertiären Stickstoffgruppen mit dem ungesättigten Carbonsäureanhydrid reagieren. Nicht verwendbar sind daher beispielsweise Aceton, Methylethylketon, Butylacetat sowie andere acetylierende Lösungsmittel. Verwendet werden können Kohlenwasserstoffe und polare Lösungsmittel, wie Dimethylformamid, Dimethylacetamid, n-Methylpyrrolidon etc.

Bevorzugt werden die tertiären Aminogruppen durch Umsetzen des hydroxyl- und carboxylgruppenhaltigen Polymerisats mit Verbindungen V, die pro Molekül durchschnittlich 0,8 bis 1,5, vorzugsweise 1, freie Isocyanatgruppe und mindestens 1 tertiäre Aminogruppe enthalten, eingeführt. Es ist aber auch möglich, das hydroxylgruppenhaltige Copolymerisat zunächst mit den Verbindungen V umzusetzen und dann erst die Carboxylgruppen durch Umsetzen mit einem Carbonsäureanhydrid in das Copolymer einzuführen. In diesem Fall kann - wie bereits ausgeführt - die Umsetzung mit dem Anhydrid bei niedrigen Temperaturen erfolgen.

Die Menge der Verbindung V wird dabei so gewählt, daß das entstehende Harz eine Aminzahl von bis zu 100 mgKOH/g aufweist. Sollen die Copolymerisate in Beschichtungsmitteln eingesetzt werden, die bei Raumtemperatur gehärtet werden, wird eine höhere Aminzahl von 10 bis 70 mgKOH/g eingestellt.

Die zur Einführung der tertiären Aminogruppe verwendeten Verbindungen V werden hergestellt, indem Diisocyanate oder Polyisocyanate mit einem stöchiometrischen Unterschuß an einem tertiären Amin umgesetzt werden. Geeignet für diese Umsetzung sind tertiäre Amine der allgemeinen Formel $NR_1R_2R_3$, wobei $R_1$ bevorzugt einen Alkanolrest oder einen anderen hydroxylgruppenhaltigen Rest bedeutet und $R_2$ bzw. $R_3$ Alkyl- oder Cycloalkylreste darstellen können. Bevorzugt sind Dialkylalkanolamine, wie z.B. Dimethylethanolamin, Diethylethanolamin sowie deren höhere Homologe bzw. Isomere.

Als Di- oder Polyisocyanate sind beispielsweise geeignet:
Aromatische Isocyanate, wie z.B. 2,4-, 2,6-Toluylendiisocyanat und deren Gemische, 4,4'-Diphenylmethandiisocyanat, m-Phenylen-, p-Phenylen-, 4,4'-Diphenylen-, 1,5-Naphthalin-, 1,4-Naphthalin, 4,4'-Toluidin-, Xylylendiisocyanat sowie substituierte aromatische Systeme, wie z.B. Dianisidindiisocyanate, 4,4'-Diphenyletherdiisocyanate oder Chlorodiphenylendiisocyanate und höherfunktionelle aromatische Isocyanate, wie z.B. 1,3,5-Triisocyanatobenzol, 4,4', 4"-Triisocyanattriphenylmethan, 2,4,6-Triisocyanatotoluol und 4,4'-Diphenyldimethylmethan-2,2', 5,5'-tetraisocyanat; cylcoaliphatische Isocyanate, wie z.B. 1,3-Cyclopentan-, 1,4-Cylcohexan-, 1,2-Cyclohexan- und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Trishexamethylentriisocyanat.

Vorzugsweise werden Diisocyanate mit unterschiedlich reaktiven Isocyanatgruppen eingesetzt, wie z.B. Isophorondiisocyanat.

Die Umsetzung zwischen dem Amin und dem Isocyanat erfolgt bei Temperaturen von 0 bis 80°C, vorzugsweise von 20 bis 50°C. Die Mengenverhältnisse der Reaktionspartner werden so gewählt, daß die gebildete Verbindung V 0,8 bis 1,5, vorzugsweise 1, freie Isocyanatgruppen enthält.

Zusätzlich zu den oder statt der carboxylgruppenhaltigen Acrylatcopolymerisate (A) können die erfindungsgemäßen Überzugsmittel ggf. noch weitere carboxylgruppenhaltige Additions- und/oder Kondensationsharze enthalten. Geeignet sind hierfür alle üblicherweise in Überzugsmitteln eingesetzten Harze. Die Auswahl dieser Harze richtet sich weitgehend nach den gewünschten Eigenschaften der Überzugsmittel in bezug auf Elastizität, Härte, Verträglichkeit, Polarität u.ä.

Bevorzugt werden als Komponente C Harze mit einer Säurezahl von 10 bis 160 mgKOH/g, besonders bevorzugt von 20 bis 120 mgKOH/g, eingesetzt. Ggf. können auch die Harze C zusätzlich tertiäre Aminogruppen und/oder Hydroxylgruppen enthalten. Bevorzugt weisen die Harze C Aminzahlen von 0 bis 90 mgKOH/g und/oder OH-Zahlen von 0 bis 250 mgKOH/g auf.

Besonders bevorzugt wird in den erfindungsgemäßen Überzugsmitteln als Bindemittel eine Mischung aus 10 bis 95 Gew.-%, bevorzugt 40 bis 90 Gew.-%, der Komponente (A) und 90 bis 5 Gew.-%, bevorzugt 10 bis 60 Gew.-%, mindestens eines carboxyl- und aminogruppenhaltigen Polyesters (Komponente C) mit einer Säurezahl von 10 bis 160, bevorzugt 20 bis 120 mgKOH/g, und einer Aminzahl von 0 bis 90, vorzugsweise 10 bis 60 mgKOH/g eingesetzt. Die Summe der Gewichtsanteile der Komponente (A) plus (C) ergibt dabei jeweils 100 Gew.-%. Bei niedrigen Anteilen der Komponente (A) werden als Komponente (A) Copolymerisate mit einem relativ hohen Anteil $a_1$ eingesetzt.

Der Polyester ist erhältlich durch Umsetzung von

P1) Polycarbonsäuren oder deren Anhydriden, ggf. zusammen mit Monocarbonsäuren,

P2) Polyolen, ggf. zusammen mit Monoolen, und ggf.

P3) weiteren modifizierenden Komponenten und ggf.

P4) einer mit dem Reaktionsprodukt aus P1, P2 und ggf. P3 reaktionsfähigen Komponente,

mit der Maßgabe, daß das Endprodukt tertiäre Aminogruppen enthält, die aus der Komponente P1 und/oder P2 und/oder P4 stammen.

Geeignete Polycarbonsäuren (Komponente P1) zur Herstellung der Polyester sind beispielsweise Phthalsäure, Isophthalsäure, Terephthalsäure, Halogenphthalsäuren, wie Tetrachlor- bzw. Tetrabromphthalsäure, Hexahydrophthalsäure, Adipinsäure, Sebacinsäure, Fumarsäure, Maleinsäure, Endomethylentetrahydrophthalsäure, 1,1,3-Trimethyl-3-phenylindan-4,5-dicarbonsäure, Trimellithsäure sowie Anhydride der genannten Säuren, sofern diese existieren.

Für die Herstellung von Polyestern mit möglichst niedriger Farbzahl ist die Verwendung von aliphatischen und cycloaliphatischen Polycarbonsäuren bzw. von deren Anhydriden, die nicht nach dem Oxo-Prozeß hergestellt werden, bevorzugt. Besonders bevorzugt ist die Verwendung von Cylcohexandicarbonsäure, da sie zu farblosen Polymeren führt, die außerdem zugleich zu einer guten Trocknung und Härteentwicklung im Lackfilm führen. Gegebenenfalls können zusammen mit den Polycarbonsäuren auch Monocarbonsäuren eingesetzt werden, wie beispielsweise Benzoesäure, tert. Butylbenzoesäure, laurinsäure, Isononansäure und Fettsäuren natürlich vorkommender Öle.

Als Komponente P1 (Carbonsäurekomponente) können in einer bevorzugten Ausführungsform u.a. oder ausschließlich Aminocarbonsäuren mit mindestens einer tert. Aminogruppe verwendet werden. Beispiele hierfür sind: Pyridin-2-carbonsäure, Pyridin-3-carbonsäure, Pyridin-4-carbonsäure und Pyridin-2,6-dicarbonsäure. Bevorzugt wird hierbei die Nicotinsäure, also Pyridin-3-carbonsäure, verwendet, weil dies bezüglich der Katalysierung der Säure/Epoxid-Reaktion eine sehr reaktive Aminocarbonsäure ist.

Als Komponente P1 kann auch vorteilhafterweise das Reaktionsprodukt eines Aminoalkohols mit mindestens einer tert. Aminogruppe und eines Polycarbonsäureanhydrids verwendet werden. Als Beispiel hierfür sei das Reaktionsprodukt aus 2-Hydroxiethylpyridin mit Phthalsäureanhydrid genannt.

Weiterhin kann als Komponente P1 das Reaktionsprodukt aus einem Polyamin mit mindestens einer tertiären und mindestens einer primären oder sekundären, bevorzugt sekundären, Aminogruppe und einem Polycarbonsäureanhydrid verwendet werden.

Geeignete Alkoholkomponenten P2 zur Herstellung des Polyesters sind mehrwertige Alkohole, wie Ethlyenglykol, Propandiole, Butandiole, Pentandiole, Hexandiole, Neopenylglykol, Diethylenglykol, Cyclohexandimethanol, Trimethylpentandiol, Ditrimethylolpropan, Trimethylolethan, Trimethylolpropan, Glycerin, Pentaerythrit, Dipentaerythrit, Trishydroxiethylisocyanurat, Polyethylenglykol, Polypropylenglykol, gegebenenfalls zusammen mit einwertigen Alkoholen, wie beispielsweise Butanol, Octanol, Laurylalkohol, ethoxilierten bzw. propoxilierten Phenolen.

Als Alkoholkomponente P2 können bevorzugt u.a. oder auch ausschließlich Aminoalkohole mit mindestens einer tert. Aminogruppe verwendet werden. Als Beispiel hierfür seien 2-Hydroxiethylpyridin, Dimethylaminopropanol, Methyldiethanolamin, Methyldipropanolamin und Dihydroxiethylanilin genannt. Ebenfalls bevorzugt werden als Alkoholkomponente P2 Umsetzungsprodukte von Epoxidharzen mit Carbonsäuren und/oder Aminen eingesetzt.

Als Alkoholkomponente P2 kann so das Umsetzungsprodukt von niedrigmolekularen Epoxidharzen mit Polycarbonsäuren und/oder Polycarbonsäureanhydriden und Aminocarbonsäuren mit mindestens einer tertiären Aminogruppe und/oder Polyaminen mit mindestens einer tertiären und mindestens einer primären oder sekundären Aminogruppe verwendet werden, wobei anschließend gegebenenfalls noch mit der Säure- und der Alkoholkomponente verestert und gegebenenfalls mit Polyisocyanaten modifiziert wird. Unter niedrigmolekularen Epoxidharzen sind Epoxidharze mit einem Molekulargewicht unter etwa 2000 zu verstehen.

Bei Verwendung von Epoxidharzen sollten chlorarme Typen eingesetzt werden, da sonst eine starke Verfärbung der Produkte auftreten kann.

Als modifizierte Komponente P3 werden bevorzugt Polyisocyanate und/oder Diepoxidverbindungen, gegebenenfalls auch Monoisocyanate und/oder Monoepoxidverbindungen verwendet. Geeignete Polyisocyanate sind beispielsweise die Toluylendiisocyanate, Hexamethylendiisocyanat sowie Isophorondiisocanat. Unter Diepoxidverbindungen sind Epoxidharze mit im Mittel etwa zwei Epoxidgruppen pro Molekül zu verstehen. Geeignete Monoepoxidverbindungen sind beispielsweise Olefinoxide, wie Octylenoxid, Butylglycidylether, Allylglycidylether, Phenylglycidylether, p-Butylphenolglycidylether, Kresylglycidylether, Styryloxid, Glycidylmethacrylat, Cyclohexenvinylmonoxid, Dipentenmonoxid, $\alpha$-Pinenoxid sowie Glycidylester von tertiären Carbonsäuren.

Als mit dem Reaktionsprodukt aus P1, P2 und gegebenenfalls P3 reaktionsfähige Komponenten P4 werden bevorzugt Monoisocyanate mit mindestens einer tertiären Aminogruppe verwendet. Diese können beispielsweise durch Umsetzung von geeigneten Diisocyanaten, wie Isophorondiisocyanat, mit Aminoalkoholen mit einer tertiären Aminogruppe, wie beispielsweise Hydroxiethylpyridin oder Dimethylaminoethanol, oder mit Polyaminen mit mindestens einer tertiären und mindestens einer sekundären oder primären Aminogruppe hergestellt werden. Die Monoisocyanate werden durch Reaktion mit freien Hydroxylgruppen des Polykondensations- und/oder Additionsproduktes unter Ausbildung einer Urethanbindung an das Bindemittelsystem gebunden.

Als Komponente P4 können auch Polyamine mit mindestens einer tertiären und mindestens einer primären oder sekundären Aminogruppe verwendet werden. Als Beispiel hierfür sei Dimethylaminopropylmethylamin genannt.

Als Alkoholkomponente kann auch das Ringöffnungsprodukt von Epoxidharzen mit wasserstoffaktiven Verbindungen verwendet werden. So können z.B. stufenweise zuerst Diepoxide, wie die bekannten Epikotetypen, mit Dicarbonsäuren, wie beispielsweise Pyridin-2,6-dicarbonsäure, zu einem Vorprodukt umgesetzt werden, welches dann als Alkoholkomponente weiter eingesetzt wird.

Weitere zum Aufbau des Polyesterharzes geeignete Komponenten P1 bis P2 sind der deutschen Patentanmeldung 36 29 470 zu entnehmen.

Wichtig ist in jedem Fall, daß das erhaltene Endprodukt eine Säurezahl im Bereich von 10 bis 160, bevorzugt von 20 bis 120, und eine Aminzahl im Bereich von 0 bis 90, bevorzugt 10 bis 60, aufweist. Durch Zugabe von Antioxidantien oder Reduktionsmitteln, wie z.B. unterphosphorige Säure, wird eine zu starke Verfärbung der Produkte während der Kondensation vermieden.

Die Herstellung der Carboxyl- und tertiäre Aminogruppen enthaltenden Polyester und Acrylate erfolgt aus den genannten Verbindungen in üblicher Weise.

Für alle zweistufigen Varianten, bei denen ein cyclisches Säureanhydrid an ein hydroxylgruppenhaltiges Polymer addiert wird, ist es bevorzugt, die Anlösung des Harzes nach der Addition nicht mit primären, sondern mit sekundären oder tertiären Alkoholen durchzuführen, um so die als Nebenreaktion ablaufende Alkoholyse der Halbesterbindung zurückzudrängen.

Als Vernetzungsmittel für die Reaktion mit den Carboxylgruppen des Copolymerisats (A) und/oder des Harzes (C) enthält das erfindungsgemäße Überzugsmittel mindestens ein Epoxidharz mit im Mittel mehr als einer Epoxidgruppe pro Molekül. Die Einsatzmengen an Bindemittel und Härter werden dabei üblicherweise so gewählt, daß das Verhältnis der Säuregruppen des Bindemittels (Komponente (A) und/oder Komponente (C)) zu den Epoxidgruppen des Härters (Komponente (B) und/oder (D)) im Bereich von 0,3 : 1 bis 3 : 1 liegt.

Die Gesamtmenge an eingesetztem Bindemittel plus Härter (ohne Lösungsmittelanteil) liegt üblicherweise zwischen

30 und 70 Gew.-%, bezogen auf das Gesamtgewicht des Überzugsmittels.

Als Vernetzerkomponente werden die Komponente (B) und/oder (D) eingesetzt. Besonders bevorzugte Überzugsmittel enthalten neben den carboxylgruppenhaltigen Acrylatcopolymerisaten (A) und ggf. weiteren carboxylgruppenhaltigen Harzen (C) als Vernetzer die Epoxidharze (D).

Die als Vernetzer geeigneten epoxidgruppenhaltigen Acrylatcopolymerisate (B) sind bereits auf den Seiten 26 bis 27 der vorliegenden Beschreibung beschrieben.

Die erfindungsgemäß eingesetzten Copolymerisate (B) weisen bevorzugt ein zahlenmittleres Molekulargewicht von 800 bis 2200 auf. Das Epoxidäquivalentgewicht der Copolymerisate (B) liegt bevorzugt zwischen 250 und 550.

Beispiele für die als Komponente (D) eingesetzten Epoxidharze sind Verbindungen mit mindestens zwei Epoxidgruppen pro Molekül, z.B. Kondensationsprodukte aus Epichlorhydrin und Bisphenol A, cycloaliphatische Bisepoxide, die den Formeln (I) und (II) entsprechen:

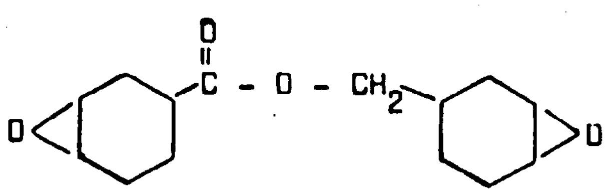

(I)

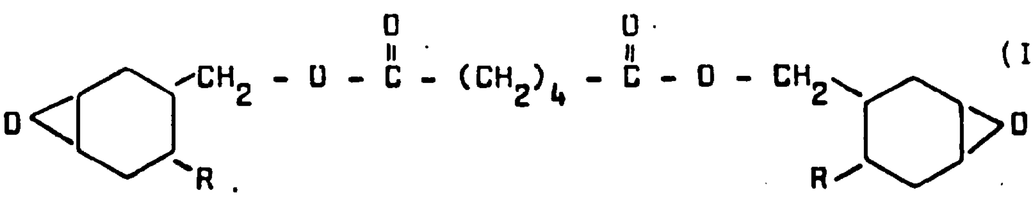

(II)

$R = H, CH_3$

Weiterhin als Komponente (D) geeignet sind beispielsweise Epoxidierungsprodukte natürlich vorkommender Fette, Öle, Fettsäurederivate, modifizierte Öle sowie epoxidierte Polybutadiene, die durch Reaktion von handelsüblichen Polybutadienölen mit Persäuren bzw. organischen Säure-$H_2O_2$-Mischungen entstehen, epoxidgruppenhaltige Novolake, Glycidylether eines mehrwertigen Alkohols, z.B. Ethylenglykoldiglycidylether, Glycerinpolyglycidylether, Sorbitolpolyglycidylether, Trimethylolpropanpolyglycidylether und Pentaerythritpolyglycidylether und niedermolekulare Acrylatharze mit seitenständigen Oxirangruppen.

Des weiteren können auch vorteilhaft als Vernetzungsmittel (D) Umsetzungsprodukte von hydroxylgruppenhaltigen Polyepoxiden mit Di- oder Polyisocyanaten eingesetzt werden, wie sie z.B. durch Umsetzung OH-funktioneller Epoxide, wie z.B. vor Sorbitolpolyglycidylethern, mit Isophorondiisocyanat entstehen.

Ebenfalls als bevorzugte Vernetzungsmittel (D) eingesetzt werden polare Epoxide, beispielsweise auf der Basis eines Umsetzungsproduktes von Melaminharzen mit Acrylamid unter anschließender Epoxidierung der Acryl-Doppelbindung. Beispielhaft für diese Substanzklasse sei das Handelsprodukt Santolink LSE 4103 der Firma Monsanto genannt, bei dem das Epoxidharzgrundgerüst ein zweikerniges Melamin ist, das Molekulargewicht bei ca. 1200 liegt und das Epoxid-Äquivalentgewicht bei ca. 300 liegt.

Ggf. kann ein Vernetzungskatalysator zur Katalyse der Carboxi-Epoxi-Reaktion verwendet werden. Hierbei eignen sich besonders tertiäre Amine, quartäre Ammoniumverbindungen, wie z.B. Benzyltrimethylammoniumchlorid, spezielle Chromverbindungen sowie Zinnverbindungen. Selbstverständlich erübrigt sich der Einsatz eines Vernetzungskatalysators in den meisten Fällen, bei denen bereits tertiäre Aminogruppen in das Acrylatcopolymerisat eingebaut sind. Durch den Einsatz eines internen oder externen Vernetzungskatalysators werden tiefere Einbrenntemperaturen und kürzere Einbrennzeiten erreicht. Vorzugsweise wird der Vernetzungskatalysator in einer Menge von 0,5 bis 10 Gew.-%, bezogen auf das Gewicht der Epoxidkomponente, verwendet.

Für die erfindungsgemäßen Überzugsmittel geeignete Lösemittel sind beispielsweise Toluol, Xylol, Butanol, Ethylacetat, Butylacetat, Pentylacetat, Glutarsäuredimethylester, Bernsteinsäuredimethylester, 1-Methoxypropyl-2-acetat, 2-Ethylhexanol, Ethylenglykoldiacetat, Ethylenglykolmonoethyl- und -butylether oder deren Acetate, Ethylenglykoldimethylether, Diethylenglykoldimethylether, Aromaten enthaltende Benzine, Cyclohexanon, Methylethylketon, Aceton, Acetoxiglykolsäurebutylester, Acetoxiglykolsäureethylester.

Diese Lösemittel können einzeln oder auch als Mischung verschiedener Lösemittel eingesetzt werden.

Die erfindungsgemäßen Überzugsmittel können außerdem gegebenenfalls Pigmente sowie Hilfs- und Zusatzstoffe enthalten. Geeignete Zusatzstoffe und Hilfsmittel sind beispielsweise Füllstoffe, wie z.B. Talkum, Glimmer, Kaolin, Kreide, Quarzmehl, Asbestmehl, Bariumsulfat, Silikate, Glasfasern und Antiabsetzmittel, wie beispielsweise fein verteilte Kieselsäure, Bentonit, kolloide Silikate und dergleichen; Verlaufsmittel, Silikonöle, Weichmacher, wie Phosphorsäureester und Phthalsäureester, viskositätskontrollierende Zusätze, Mattierungsmittel, UV-Absorber und Lichtschutzmittel.

Die Pigmente und Füllstoffe werden üblicherweise in einer Menge von 0 bis 60 Gew.-%, bezogen auf das Gesamtgewicht des Überzugsmittels, eingesetzt. Die Einsatzmenge der Hilfs- und Zusatzstoffe beträgt üblicherweise 0,2 bis 10 Gew.-%, bezogen auf das Gesamtgewicht des Überzugsmittels. Der Lösemittelgehalt der Überzugsmittel beträgt gewöhnlich von 30 bis 70 Gew.-%, bezogen auf das Gesamtgewicht des Überzugsmittels. Der Anteil an Bindemittel plus Härter beträgt im allgemeinen 30 bis 70 Gew.-%, bezogen auf das Gesamtgewicht des Überzugsmittels.

Die Herstellung der erfindunggemäßen Überzugsmittel erfolgt in bekannter Weise durch Mischen und ggf. Dispergieren der einzelnen Bestandteile.

Die Herstellung der erfindungsgemäßen Überzugsmittel erfolgt bevorzugt durch ein Verfahren, das dadurch gekennzeichnet ist, daß das Acrylatcopolymerisat (A) und/oder (B) durch Lösungspolymerisation bei Temperaturen zwischen 90 und 160 °C, bevorzugt zwischen 100° und 140°C, hergestellt wird, indem

1.) mindestens 10 Gew.-% der Gesamtmenge des Polysiloxanmakromonomers $a_1$ vorgelegt werden und

2.) die anderen Monomeren und der ggf. vorhandene Rest des Polysiloxanmakromonomers $a_1$ zudosiert werden.

Die erfindungsgemäßen Überzugsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die erfindungsgemäßen Überzugsmittel eignen sich - wenn durch entsprechende Wahl der Härterkomponente - niedrige Härtungstemperaturen zwischen ca. 10°C und 130°C, bevorzugt ≤ 80°C, angewandt werden können (s.o.) - für die Reparaturlackierung von Kraftfahrzeugen sowie insbesondere für die Verwendung als Deck- und Klarlack, aber auch als Grundierung und Füllermaterial. Sie eignen sich insbesondere auch als Klarlack über einer Basisschicht einer Metallic-Mehrschichtlackierung.

Die Erfindung wird in den folgenden Beispielen näher erläutert. Alle Angaben über Teile und Prozentsätze sind Gewichtsangaben, falls nicht ausdrücklich etwas anderes festgestellt wird.

1. Herstellung verschiedener carboxylgruppenhaltiger Acrylatcopolymerisate (A)

Die Herstellung der Acrylatcopolymerisate (A) erfolgte jeweils in einem 4-Liter-Edelstahlpolymerisationskessel mit Rührer, Rückflußkühler, zwei Monomerenzuläufen und einem Initiatorzulauf. Die jeweils angegebenen Komponenten werden eingewogen und dann die Vorlage auf 110°C aufgeheizt.

Mit dem Start aller Zuläufe wird gleichzeitig begonnen, innerhalb von 3 h werden die beiden Monomerenzuläufe gleichmäßig zudosiert, innerhalb von 4 h wird der Initiatorzulauf zudosiert. Während der Polymerisation wird die Temperatur im Kessel auf 108 - 110°C gehalten. Danach wird noch 2 h nachpolymerisiert. Die so erhaltene Acrylatharzlösung hat einen Festkörper von 50 %. Es werden anschließend die entsprechenden Teile Hexahydrophthalsäureanhydrid (HHPSA) zugegeben (siehe Tabelle) und bei 110°C an das Acrylatharz addiert. Nachdem die Säurezahlbestimmung in wäßriger und alkoholischer KOH gleiche Werte ergibt, wird mit sek. Butanol auf 50 % Festkörpergehalt verdünnt.

Als Siloxanmakromonomer wurde das Handelsprodukt Marubeni® AK 5 der Firma Toagosei Chemical Industries Co., LTD. eingesetzt. Es weist ein zahlenmittleres Molekulargewicht von ca. 5000 und im Mittel eine ethylenisch ungesättigte Doppelbindung pro Molekül auf.

Tabelle

| Beispiel | A1 | A2 | A3 | A4 | A5 | A6 | A7 | A8 |
|---|---|---|---|---|---|---|---|---|
| Gehalt (Teile) HHPSA | 309,8 | 178,8 | 310,3 | 310,2 | 324,7 | 315,5 | 313,8 | 104,6 |

1.1. Herstellung eines Acrylatcopolymerisats (A1)

Vorlage:

| | |
|---|---|
| 13 | Teile Siloxanmakromonomer (Marubeni® AK5) |
| 552,2 | Teile Butylacetat |
| 552,2 | Teile Xylol |

Monomerenzulauf A:

| | |
|---|---|
| 130 | Teile Dimethylaminoethylmethacrylat |
| 130 | Teile Ethylhexylacrylat |
| 195 | Teile Hydroxibutylacrylat |
| 312 | Teile n-Butylacrylat |

Monomerenzulauf B:

| | |
|---|---|
| 208 | Teile Hexandioldimethacrylat |
| 195 | Teile Hydroxiethylmethacrylat |
| 130 | Teile Styrol |
| 6,5 | Teile Mercaptoethanol |
| 0,7 | Teile Triisodecylphosphit |

Initiatorzulauf:

| | |
|---|---|
| 65 | Teile 2,2'-Azobis(2-methylbutannitril) |
| 130 | Teile Butylacetat |
| 130 | Teile Xylol |

Viskosität (original): >40 dPa s (23°C) Säurezahl (wäßrig/alkoholisch): 67,5/71,1 mgKOH/g

1.2 Herstellung eines Acrylatcopolymerisats (A2)

Vorlage:

| | |
|---|---|
| 22,7 | Teile Siloxanmakromonomer (Marubeni® AK5) |
| 596,1 | Teile Butylacetat |
| 596,1 | Teile Xylol |

Monomerenzulauf A:

| | |
|---|---|
| 195 | Teile Hydroxybutylacrylat |
| 173,3 | Teile Ethylhexylacrylat |
| 355,3 | Teile n-Butylacrylat |

Monomerenzulauf B:

| | |
|---|---|
| 208 | Teile Hexandioldimethacrylat |
| 173,3 | Teile Cyclohexylmethacrylat |
| 185,9 | Teile Hydroxyethylmethacrylat |
| 6,5 | Teile Mercaptoethanol |
| 0,65 | Teile Triisodecylphosphit |

Initiatorzulauf:

| | |
|---|---|
| 33,8 | Teile 2,2'-Azobis (2-methylbutannitril) |
| 67,6 | Teile Butylacetat |
| 67,6 | Teile Xylol |

Viskosität (original): 3,0 dPa s (23°C) Säurezahl (wäßrig/alkoholisch): 75,5/80,4 mgKOH/g

1.3 Herstellung eines Acrylatcopolymerisats (A3)

Vorlage:

| | |
|---|---|
| 596,1 | Teile Butylacetat |
| 596,1 | Teile Xylol |

Monomerenzulauf A:

| | |
|---|---|
| 65 | Teile Dimethylaminoethylmethacrylat |
| 195 | Teile Hydroxybutylacrylat |
| 162,5 | Teile Ethylhexylacrylat |
| 312 | Teile n-Butylacrylat |

Monomerenzulauf B:

| | |
|---|---|
| 208 | Teile Hexandioldimethacrylat |
| 162,5 | Teile Cyclohexylmethacrylat |
| 185,9 | Teile Hydroxyethylmethacrylat |
| 22,8 | Teile Siloxanmakromonomer (Marubeni® AK5) |
| 6,5 | Teile Mercaptoethanol |
| 0,7 | Teile Triisodecylphosphit |

Initiatorzulauf:

| | |
|---|---|
| 33,8 | Teile 2,2′-Azobis(2-methylbutannitril) |
| 67,6 | Teile Butylacetat |
| 67,6 | Teile Xylol |

Viskosität (original): 11,0 dPa s (23°C) Säurezahl (wäßrig/alkoholisch): 74,7/71,2 mgKOH/g

1.4 Herstellung eines Acrylatcopolymerisats (A4)

Vorlage:

| | |
|---|---|
| 596,1 | Teile Butylacetat |
| 596,1 | Teile Xylol |

Monomerenzulauf A:

| | |
|---|---|
| 195 | Teile Hydroxybutylacrylat |
| 173,3 | Teile Ethylhexylacrylat |
| 355,3 | Teile n-Butylacrylat |

Monomerenzulauf B:

| | |
|---|---|
| 208 | Teile Hexandioldimethacrylat |
| 173,3 | Teile Cyclohexylmethacrylat |
| 185,9 | Teile Hydroxiethylmethacrylat |
| 22,7 | Teile Siloxanmakromonomer (Marubeni® AK5) |
| 6,5 | Teile Mercaptoethanol |
| 0,65 | Teile Triisodecylphosphit |

Initiatorzulauf:

| | |
|---|---|
| 33,8 | Teile 2,2′-Azobis(2-methylbutannitril) |
| 67,6 | Teile Butylacetat |
| 67,6 | Teile Xylol |

Viskosität (original): 2,4 dPa s (23°C) Säurezahl (wäßrig/alkoholisch): 72,4/70,9 mgKOH/g

1.5 Herstellung eines Acrylatcopolymerisats (A5)

Vorlage:

| | |
|---|---|
| 32,5 | Teile Siloxanmakromonomer (Marubeni® AK5) |
| 546,9 | Teile Butylacetat |
| 546,9 | Teile Xylol |

Monomerenzulauf A:

| | |
|---|---|
| 130 | Teile Dimethylaminoethylmethacrylat |
| 195 | Teile Hydroxybutylacrylat |
| 305,5 | Teile n-Butylacrylat |
| 130 | Teile Ethylhexylacrylat |

Monomerenzulauf B:

| | |
|---|---|
| 208 | Teile Hexandioldimethacrylat |
| 195 | Teile Hydroxyethylmethacrylat |
| 123,5 | Teile Styrol |
| 6,5 | Teile Mercaptoethanol |
| 0,7 | Teile Triisodecylphosphit |

Initiatorzulauf:

| | |
|---|---|
| 65 | Teile 2,2′-Azobis(2-methylbutannitril) |
| 130 | Teile Butylacetat |
| 130 | Teile Xylol |

Viskosität (original): thixotrop Säurezahl (wäßrig/alkoholisch): 76,8/78,1 mgKOH/g

1.6 Herstellung eines Acrylatcopolymerisats (A6)

Vorlage:

| | |
|---|---|
| 81,3 | Teile Siloxanmakromonomer (Marubeni® AK5) |
| 531,9 | Teile Butylacetat |
| 531,9 | Teile Xylol |

Monomerenzulauf A:

| | |
|---|---|
| 130 | Teile Dimethylaminoethylmethacrylat |
| 195 | Teile Hydroxybutylacrylat |
| 295,8 | Teile n-Butylacrylat |
| 130 | Teile Ethylhexylacrylat |

Monomerenzulauf B:

| | |
|---|---|
| 208 | Teile Hexandioldimethacrylat |
| 195 | Teile Hydroxyethylmethacrylat |
| 113,5 | Teile Styrol |
| 6,5 | Teile Mercaptoethanol |
| 0,7 | Teile Triisodecylphosphit |

Initiatorzulauf:

| | |
|---|---|
| 65 | Teile 2,2′-Azobis(2-methylbutannitril) |
| 130 | Teile Butylacetat |
| 130 | Teile Xylol |

Viskosität (original): >40 dPa s Säurezahl (wäßrig/alkoholisch): 79,1/78,7 mgKOH/g

1.7 Herstellung eines Acrylatcopolymerisats (A7) (Vergleich)

Vorlage:

| | |
|---|---|
| 162,5 | Teile Siloxanmakromonomer (Marubeni® AK5) |
| 503,5 | Teile Butylacetat |
| 503,5 | Teile Xylol |

Monomerenzulauf A:

| | |
|---|---|
| 130 | Teile Dimethylaminoethylmethacrylat |
| 195 | Teile Hydroxybutylacrylat |
| 279,5 | Teile n-Butylacrylat |
| 130 | Teile Ethylhexylacrylat |

Monomerenzulauf B:

| | |
|---|---|
| 208 | Teile Hexandioldimethacrylat |
| 195 | Teile Hydroxyethylmethacrylat |
| 97,5 | Teile Styrol |
| 6,5 | Teile Mercaptoethanol |
| 0,7 | Teile Triisodecylphosphit |

Initiatorzulauf:

| | |
|---|---|
| 65 | Teile 2,2′-Azobis(2-methylbutannitril) |
| 130 | Teile Butylacetat |
| 130 | Teile Xylol |

Viskosität (original): >40 dPa s (23°C) Säurezahl (wäßrig/alkoholisch): 70,2/69,9 mgKOH/g

1.8 Herstellung eines Acrylatcopolymerisats (A8) (Vergleich)

Vorlage:

| | |
|---|---|
| 231,9 | Teile Butylacetat |
| 231,9 | Teile Xylol |

Monomerenzulauf A:

| | |
|---|---|
| 50 | Teile Dimethylaminoethylmethacrylat |
| 75 | Teile Hydroxybutylacrylat |
| 120 | Teile n-Butylacrylat |
| 50 | Teile Ethylhexylacrylat |

Monomerenzulauf B:

| | |
|---|---|
| 80 | Teile Hexandioldimethacrylat |
| 75 | Teile Hydroxyethylmethacrylat |
| 50 | Teile Styrol |
| 2,5 | Teile Mercaptoethanol |
| 0,25 | Teile Triisodecylphosphit |

Initiatorzulauf:

| | |
|---|---|
| 13 | Teile 2,2′-Azobis(2-methylbutannitril) |
| 26 | Teile Butylacetat |
| 26 | Teile Xylol |

Viskosität (original): >26 dPa s (23°C) Säurezahl (wäßrig/alkoholisch): 75/77 mgKOH/g

2. Herstellung eines Polyesterharzes

In einem 4-Liter-Polykondensationskessel mit Rührer, dampfbeheizter Kolonne und Wasserabscheider werden 488 Teile Hexahydrophthalsäureanhydrid, 515 Teile 1,4-Cyclohexandicarbonsäure, 752 Teile Trimethylolpropan, 72,5 Teile Neopentylglykol, 82,8 Teile Methyldiethanolamin, 200 Teile Isononansäure, 77 Teile Benzoesäure, 88 Teile Xylol und 1,14 Teile Triisodecylphosphit gegeben und langsam aufgeheizt. Es wird bei einer Temperatur von max. 190°C bis zu einer Säurezahl von 20 mgKOH/g und einer Viskosität von 2,0 dPas (50 %ig in Butylglykol) kondensiert, anschließend wird gekühlt und bei 130°C mit 886 Teilen Xylol angelöst. Nach weiterem Kühlen auf 50°C werden nun zu dieser Lösung 321,3 Teile Hexahydrophthalsäureanhydrid und 1,12 Teile Triisodecylphosphit gegeben. Die Addition des Anhydrides erfolgt bei max. 50°C bis eine Säurezahl von 68 mgKOH/g und eine Viskosität von 2,4 dPas (50 %ig in Butylglykol) erreicht ist. Danach wird mit 377 Teilen Xylol und 147 Teilen sek. Butanol angelöst.

Der so erhaltene Polyester hat einen Festkörper von 61,5 %, eine Säurezahl von 68 mgKOH/g und eine Viskosität von 13,5 dPas (original).

Herstellung einer Härterlösung 1

63,8 Teile eines handelsüblichen, aliphatischen Epoxidharzes mit einem Molgewicht von ca. 1200 und einem Epoxidäquivalentgewicht von ca. 250 - 550 auf der Basis eines zweikernigen Melaminharzes, umgesetzt mit Acrylamid und anschließender Epoxidierung der Acryl-Doppelbindungen (Handelsprodukt Monsanto LSE 4114 der Firma Monsanto) und 36,2 Teile Methoxipropanol werden gemischt.

Herstellung einer Lackverdünnung 1

50 Teile Methoxypropanol, 25 Teile 1-Methoxipropylacetat-2 und 25 Teile n-Butanol werden gemischt.

Beispiele 1 bis 6

53 Teile der Copolymerisatlösungen A1 oder A2 oder A3 oder A4 oder A5 oder A6, 27 Teile des Polyesterharzes 1, 1 Teil eines handelsüblichen Lichtschutzmittels auf Basis Benztriazol (Handelsprodukt Tinuvin$^R$ 900 der Firma Ciba Geigy), 1 Teil eines handelsüblichen Lichtschutzmittels auf Basis eines sterisch gehinderten Amins (Handelsprodukt Tinuvin® 440 der Firma Ciba Geigy) und 18 Teile Methoxipropanol werden nacheinander mit einem Dissolver verrührt.

Kurz vor der Applikation des Klarlackes werden 50 Teile der Härterlösung 1 und 30 Teile Lackverdünnung 1 zugemischt. Die Zusammensetzung der Klarlacke ist in Tabelle 2 zusammengefaßt. Die so hergestellten Lackmischungen wurden als Klarlack nach dem Naß-in-Naß-Verfahren auf einen handelsüblichen konventionellen Silbermetallic-Basislack (Basis Polyesterharz, Melaminharz und Celluloseacetobutyrat, Handelsprodukt AE 54 der Firma BASF Lacke + Farben AG; Trockenfilmschichtdicke 20 ± 5 µm) mit einer Trockenfilmschichtdicke von 50 ± 10 µm appliziert.

Die so erhaltenen Beschichtungen wurden sofort auf Trocknung geprüft (berührtrocken). Für die weiteren Prüfungen wurden zunächst alle Tafeln 1 h bei Raumtemperatur und 30 min bei 60°C getrocknet. Nach 24 h weiterer Trocknung bei Raumtemperatur wurde die Pendelhärte nach König, die Benzinfestigkeit mit Hilfe des Gasspilltestes sowie die Haftung mit Hilfe des Abklebetestes bestimmt. Nach 7-tägiger Lagerung bei Raumtemperatur wurden die Elastizität mittels der Erichsen-Tiefung, die Witterungsbeständigkeit mit Hilfe des Volvo-Tests sowie die Kratzfestigkeit der resultierenden Beschichtungen bestimmt. Ferner wurden die in Tabelle 3 angegebenen Prüfungen durchgeführt.

Vergleichsbeispiele 1 bis 3

Die Herstellung, Applikation, Aushärtung und Prüfung der Klarlacke der Vergleichsbeispiele 1 bis 3 erfolgte analog zu den Beispielen 1 bis 6. Der Klarlack des Vergleichsbeispiels 1 unterscheidet sich von denen der Beispiele 1 bis 6 lediglich dadurch, daß statt eines erfindungsgemäßen Copolymerisats (A) nun ein siloxangruppenhaltiges Copolymerisat (A7) mit einem zu hohen Gehalt an Polysiloxanmakromonomer $a_1$ eingesetzt wurde.

Der Klarlack des Vergleichsbeispiels 2 unterscheidet sich von denen der Beispiele 1 bis 6 dadurch, daß statt eines erfindungsgemäßen Copolymerisats (A) nun ein siloxangruppenfreies Copolymerisat (A8) eingesetzt wurde. Ferner ist der Zusatz von 0,01 %, bezogen auf das Gesamtgewicht des Klarlackes einschließlich Härterlösung 1 und Verdünnung 1, eines Fluortensids als Verlaufsmittels erforderlich.

Der Klarlack des Vergleichsbeispiels 3 unterscheidet sich von denen der Beispiele 1 bis 6 dadurch, daß statt eines erfindungsgemäßen Copolymerisats (A) nun ein siloxangruppenfreies Copolymerisat (A8) eingesetzt wurde. Ferner wurden dem Klarlack 0,1 %, bezogen auf das Gesamtgewicht des Klarlackes, eines handelsüblichen Silikon-Additivs (Handelsprodukt Tegoglide® 410 der Firma Tegochemie Essen) zugesetzt.

Die Zusammensetzung der Klarlacke ist in Tabelle 2 angegeben. Die Prüfergebnisse der Beschichtungen sind in Tabelle 4 zusammengefaßt.

Tabelle 1: Zusammensetzung (in Gew.-%) und Kennzahlen der Copolymerisate A1 bis A8

| | A1 | A2 | A3 | A4 | A5 | A6 | A7 | A8 |
|---|---|---|---|---|---|---|---|---|
| Dimethylaminoethylmethacrylat | 10,0 | - | 5,0 | - | 10,0 | 10,0 | 10,0 | 10,0 |
| Ethylhexylacrylat | 10,0 | 13,3 | 12,5 | 13,3 | 10,0 | 10,0 | 10,0 | 10,0 |
| Hydroxybutylacrylat | 14,9 | 15,0 | 15,0 | 15,0 | 15,0 | 15,0 | 15,0 | 15,0 |
| n-Butylacrylat | 23,9 | 27,4 | 24,0 | 27,4 | 23,5 | 22,75 | 21,5 | 24,0 |
| Hexandioldimethacrylat | 15,9 | 16,0 | 16,0 | 16,0 | 16,0 | 16,0 | 16,0 | 16,0 |
| Hydroxyethylmethacrylat | 14,9 | 14,3 | 14,3 | 14,3 | 15,0 | 15,0 | 15,0 | 15,0 |
| Styrol | 10,0 | - | - | - | 9,5 | 8,75 | 7,5 | 10,0 |
| Cyclohexylmethacrylat | - | 13,3 | 12,5 | 13,3 | - | - | - | - |
| Siloxanmakromonomer | 0,4 | 0,7 | 0,7 | 0,7 | 1,0 | 2,5 | 5 | - |
| OHZ (Zwischenprodukt) (mgKOH/g) | 115,3 | 114,2 | 115,1 | 115,1 | 115,3 | 115,3 | 115,3 | 119,8 |
| OHZ (End) (mgKOH/g) | 27,3 | 22,2 | 25,3 | 25,2 | 23,6 | 25,9 | 26,0 | 39,4 |
| Säurez.(End) (mgKOH/g) wäßrig | 67,5 | 75,5 | 74,7 | 72,4 | 79,1 | 76,8 | 70,2 | 70,0 |
| Säurez. (End) (mgKOH/g) alkoholisch | 71,1 | 80,4 | 71,2 | 70,9 | 78,7 | 78,1 | 69,9 | 70,4 |
| Aminzahl (End) (mgKOH/g) | 28,5 | - | 14,0 | - | 27,6 | 27,9 | 27,8 | 27,6 |
| Siloxan in | Vorl. | Vorl. | Zul. | Zul. | Vorl. | Vorl. | Vorl. | - |

Tabelle 2:

| Klarlackzusammensetzungen in Teilen | | | | | | | | | |
|---|---|---|---|---|---|---|---|---|---|
| Beispiel | 1 | 2 | 3 | 4 | 5 | 6 | V1 | V2 | V3 |
| Cop. A1 | 53 | | | | | | | | |
| Cop. A2 | | 53 | | | | | | | |
| Cop. A3 | | | 53 | | | | | | |
| Cop. A4 | | | | 53 | | | | | |
| Cop. A5 | | | | | 53 | | | | |
| Cop. A6 | | | | | | 53 | | | |
| Cop. A7 | | | | | | | 53 | | |
| Cop. A8 | | | | | | | | 53 | 53 |
| Polyester | 27 | 27 | 27 | 27 | 27 | 27 | 27 | 27 | 27 |
| Tinuvin® 900 | 1 | 1 | 1 | 1 | 1 | 1 | 1 | 1 | 1 |
| Tinuvin® 440 | 1 | 1 | 1 | 1 | 1 | 1 | 1 | 1 | 1 |
| Methoxypropanol | 18 | 18 | 18 | 18 | 18 | 18 | 18 | 17,99 | 17,9 |
| Fluortensid | - | - | - | - | - | - | - | 0,01 | - |
| Silikon | - | - | - | - | - | - | - | - | 0,1 |
| Härterlösg.I | 50 | 50 | 50 | 50 | 50 | 50 | 50 | 50 | 50 |
| Verdünnung 1 | 30 | 30 | 30 | 30 | 30 | 30 | 30 | 30 | 30 |

Alle Klarlacke wurden mit der Verdünnung 1 auf eine Spritzviskosität von 18 - 20 s Auslaufzeit im DIN 4 Becher bei 23°C eingestellt. Der Festkörpergehalt der Klarlacke bei Spritzviskosität lag bei 40 - 45 %.

Tabelle 3: Prüfergebnisse

| Beispiel | 1 | 2 | 3 | 4 | 5 | 6 |
|---|---|---|---|---|---|---|
| Pendelhärte (s) 1) | 76 | 67 | 63 | 60 | 70 | 75 |
| Berührtrocken (min.) | 20 | 30 | 60 | 75 | 20 | 20 |
| Abklebetest 2) | 3 | 3 | 1 | 0 | 3 | 3 |
| Gasspilltest 3) | 10 | 10 | 10 | 10 | 10 | 10 |
| Gasspilltest 10 Rd Volvo | 9 | 9 | -9) | -9) | 9 | 10 |
| Erichsentiefung (mm) | 6 | 6 | 6 | 5 | 6 | 6 |
| Volvo-Test 4) | m3 g1 | m4 g1 | m5 g2 | m5 g3 | m2 g1 | m1 g1 |
| 10 Runden | g.l.a. | l.a. | s.a. | s.a. | g.l.a. | g.l.a. |
| Kratzfestigk. 5) | l.m. | m. | m. | s.m. | l.m. | l.m. |
| Randwinkel 6) (°) | > 90 | > 90 | > 90 | > 90 | > 90 | > 90 |
| Überlackierbarkeit 7) | i.O. | i.O. | n.i.O. | n.i.O. | i.O. | i.O. |
| Verlauf | i.O. | i.O. | n.i.O. | n.i.O. | i.O. | l.g. 10) |
| DOI 8) | 93 | 94 | 90 | 90 | 93 | 94 |
| Trübung | keine | keine | leicht | leicht | leicht 11) | stark 12) |

9) Nicht mehr auswertbar, gestörte Oberfläche

10) Verlauf leicht gestört

11) Trübung verschwindet nach Umrühren

12) Trübung wird geringer nach Umrühren

Tabelle 4: Prüfergebnisse

| | V1 | V2 | V3 |
|---|---|---|---|
| Pendelhärte (s) 1) | -9) | 71 | 70 |
| Berührtrocken (min.) | - | 45 | 45 |
| Abklebetest 2) | - | 1 | 1 |
| Gasspilltest 3) | - | 5 | 5 |
| Gasspilltest 10 Rd Volvo | - | 4 | 5 |
| Erichsentiefung (mm) | - | 4,5 | 5 |
| Volvo-Test 4) | - | m5 g3 | m5 g3 |
| 10 Runden | - | s.a. | s.a. |
| Kratzfestigk. 5) | - | s.m. | m. |
| Randwinkel 6) (°) | - | 75-85 | 80-90 |
| Überlackierbarkeit 7) | - | n.i.O. | i.O. |
| Verlauf | - | i.O. | i.O. |
| DOI | - | 81 | 82 |
| Trübung | - | keine | keine |

Erläuterungen zu Tabelle 3 und Tabelle 4:

1) Pendelhärte nach König in s

2) Tesakrepp® 4330 wird auf den Film gekleppt und nach 1 h entfernt. Die Markierung wird visuell beurteilt:
3 = keine Markierung, 2 = leichte Markierung, 1 = Markierung, 0 = starke Markierung

3) 5 ml handelsübliches Superbenzin werden auf die 45° schräg gestellte Festplatte gegeben. Nach 5 min wird die Markierung beurteilt: 1 = sehr starke Markierung, 10 = keine Markierung. Dieser Test wird an Tafeln, die 1 h bei RT, 30 min 60°C und 24 h bei RT getrocknet wurden durchgeführt. Ferner wird dieser Test an Tafeln wiederholt, die 10 Belastungsrunden im Volvo-Test ausgesetzt waren.

4) Die Testbleche werden 10 Belastungsrunden ausgesetzt, wobei eine Runde sich folgendermaßen zusammensetzt: 4 h Lagerung bei 50°C, anschließend 2 h Lagerung bei 35°C und 100 % rel. Luftfeuchte, anschließend 2 h Lagerung bei 35°C, 100 % rel. Luftfeuchte und 2 l $So_2$ auf 300 l Luft und schließlich 16 h Lagerung bei - 30°C.
Danach wird der Blasengrad nach DIN 53 209 und beurteilt: g.l.a. = glanz leicht angequollen, l.a. = leicht angequollen, s.a. = stark angequollen.

5) 250 g Seesand werden aus 1 m Höhe auf eine 45° schräg gestellte Testtafel auf eine Fläche von 5 x 5 cm aufgegeben. Anschließend wird die Markierung beurteilt: l.m. leicht markiert, m = markiert, s.m. = stark markiert.

6) Die Randwinkelmessung erfolgte am Wassertropfen.

7) Die Prüftafeln werden 1 h bei RT, 30′ bei 60°C und 24 h bei Raumtemperatur (RT) getrocknet. Dann wurde mit Schleifpapier 600 trocken die obere Hälfte der Prüftafeln angeschliffen. Dann wurde die linke Hälfte (geschliffener und ungeschliffener Teil) mit einem handelsüblichen konventionellen Basislack auf Basis Polyesterharz, Melaminharz und Celluloseacetobutyrat (AE 54 der Firma BASF Lacke + Farben AG, Münster) überspritzt. Anschließend wurde das gesamte Testblech mit dem jeweiligen Klarlack überzogen (Trockenfilmschichtdicke 50 - 60 µm). Die Tafel wurde dann 30 min. bei 60°C getrocknet. Anschließend wurde die Beschichtung visuell beurteilt: i.O. = in keinem Bereich sind Anquellungen zu beobachten.

8) Gemessen mit dem Gerät 1792 der Firma ATI Systems Inc., 32355 Howard Ave. Madison Heights, Michigan, USA

9) Der Klarlack des Vergleichsbeispiels 1 ist

sehr stark trübe. Beim Aufspritzen erhält man sehr stark gestörte Oberflächen. Weitere Prüfungen wurden daher nicht durchgeführt.

Zusammenfassung der Prüfergebnisse

Der Vergleich der Beispiele 1 bis 6 mit den Vergleichsbeispielen 1 bis 3 zeigt, daß durch den Einbau geringer Mengen des Polysiloxanmakromonomers $a_1$ die Benzinfestigkeit der resultierenden Beschichtungen deutlich verbessert wird. Auch die Benzinfestigkeit der resultierenden Beschichtungen nach Belastung (10 Runden im Volvo-Test) ist deutlich verbessert. Ferner sind auch die Kratzfestigkeit und Oberflächenglätte der resultierenden Beschichtung deutlich verbessert.

Der Vergleich des Beispiels 1 mit dem Vergleichsbeispiel 2 zeigt außerdem, daß durch den Einbau geringer Mengen des Polysiloxanmakromonomers $a_1$ die Überlackierbarkeit der resultierenden Beschichtungen bereits nach 24 h Lagerung bei Raumtemperatur erreicht ist, daß der Decklackstand verbessert ist und daß die Kurzzeitbewitterungsergebnisse im Volvotest von einem nicht akzeptablen Niveau auf ein akzeptables Niveau verbessert werden.

Der Vergleich der Beispiele 2 und 4 sowie der Beispiele 5 und 6 zeigt ferner, daß vorteilhafterweise das Polysiloxanmakromonomer $a_1$ bei der Herstellung des Copolymerisats A vorgelegt wird, daß aber auch akzeptable Resultate erhalten werden, wenn das Polysiloxanmakromonomer $a_1$ mit den übrigen Monomeren zudosiert wird.

**Patentansprüche**

**1.** Überzugsmittel, das als Bindemittel mindestens ein carboxylgruppenhaltiges Polymer und als Härter mindestens ein Epoxidharz mit im Mittel mehr als einer Epoxidgruppe pro Molekül enthält, wobei die Gesamtmenge an Bindemittel plus Härter zwischen 30 und 70 Gew. %, bezogen auf das Gesamtgewicht des Überzugsmittels, liegt, dadurch gekennzeichnet, daß das Überzugsmittel

A) mindestens ein carboxylgruppenhaltiges Acrylatcopolymerisat (A) mit einer Säurezahl von 40 bis 150 mg KOH/g, das erhältlich ist durch Lösungspolymerisation von

$a_1$) 0,05 bis 2,5 Gew.% eines oder mehrerer Polysiloxanmakromonomerer $a_1$,

$a_2$) 0 bis 40 Gew. % eines oder mehrerer carboxylgruppenhaltiger, ethylenisch ungesättigter Monomerer,

$a_3$) 0 bis 40 Gew.% eines oder mehrerer vinylaromatischer Kohlenwasserstoffe,

$a_4$) 0 bis 99,95 Gew.% eines oder mehrerer hydroxylgruppenhaltiger, ethylenisch ungesätttigter Monomerer

$a_5$) 0 bis 30 Gew.-% eines oder mehrerer Monomerer mit mindestens zwei polymerisierbaren, ethylenisch ungesättigten Doppelbindungen und

$a_6$) 0 bis 80 Gew.% eines oder mehrerer anderer ethylenisch ungesättigter copolymerisierbarer Monomerer,

wobei die Summe der Gewichtsanteile der Komponenten $a_1$ bis $a_6$ jeweils 100 Gew.% beträgt und wobei die Einsatzmengen der Komponenten $a_2$ und $a_4$ nicht beide gleichzeitig Null sein dürfen und ggf. dieses in der ersten Stufe erhaltene Copolymer - falls es Hydroxylgruppen enthält - mit Carbonsäureanhydriden umgesetzt worden ist, wobei die Menge an eingesetzten Carbonsäureanhydriden so gewählt worden ist, daß das entstehende Copolymer (A) die gewünschte Säurezahl aufweist,
und/oder

B) mindestens ein epoxidgruppenhaltiges Acrylatcopolymerisat (B), das erhältlich ist durch Lösungspolymerisation von

$e_1$) 0,05 bis 2,5 Gew.-% eines oder mehrerer Polysiloxanmakromonomerer $a_1$,

$e_2$) 10 bis 50 Gew.-% eines oder mehrerer epoxidgruppenhaltiger, ethylenisch ungesättigter Monomerer,

$e_3$) 0 bis 40 Gew.-% eines oder mehrerer vinylaromatischer Kohlenwasserstoffe,

$e_4$) 0 bis 30 Gew.-% eines oder mehrerer Monomerer mit mindestens zwei polymerisierbaren, ethylenisch ungesättigten Doppelbindungen und

$e_5$) 0 bis 89,95 Gew.-% eines oder mehrerer ethylenisch ungesättigter copolymerisierbarer Monomerer,

wobei die Summe der Gewichtsanteile der Komponenten $e_1$ bis $e_5$ jeweils 100 Gew.% beträgt,

C) ggf. ein oder mehrere weitere carboxylgruppenhaltige Additions- und/oder Kondensationsharze und

D) ggf. ein oder mehrere weitere Epoxidharze

enthält, wobei $a_1$ ein zahlenmittleres Molekulargewicht von 1000 bis 40000 aufweist, im Mittel 0,5 bis 2,5 ethylenisch ungesättigte Doppelbindungen pro Molekül enthält und

- eine Verbindung, die herstellbar ist durch Umsetzung hydroxyfunktioneller Silane mit Epichlorhydrin und anschließender Umsetzung des Reaktionsprodukts mit (Meth)Acrylsäure und/oder Hydroxyalkylestern der (Meth) Acrlysäure,

- ein Polysiloxanmakromonomer der Formel

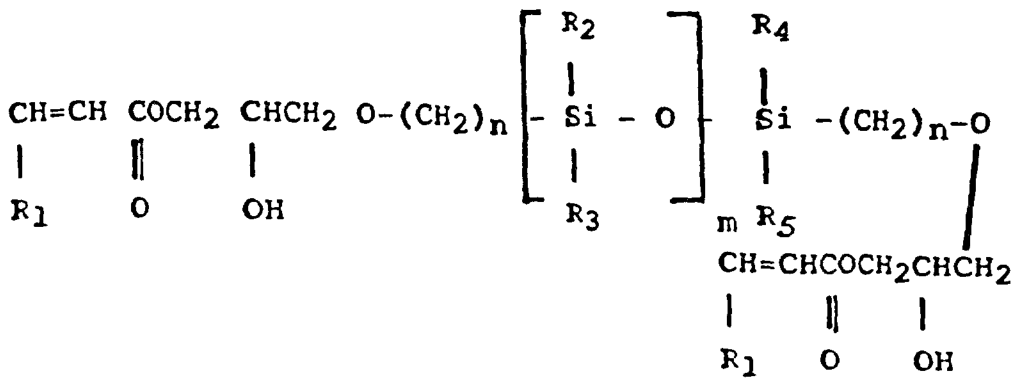

mit
$R_1$ = H oder $CH_3$
$R_2$, $R_3$, $R_4$, $R_5$, = gleiche oder verschiedene aliphatische Kohlenwasserstoffreste mit 1 bis 8 C-Atomen, n = 2 bis 5, m = 8 bis 30, oder

- ein Polysiloxanmakromonomer ist, das hergestellt worden ist durch Umsetzung von 70 bis 99,999 Mol-% einer Verbindung (1), dargestellt durch die Formel (I)

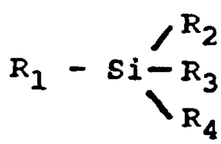

(I)

in welcher $R_1$ eine aliphatische Kohlenwasserstoffgruppe mit 1 bis 8 C-Atomen oder einen Phenylrest darstellt und $R_2$, $R_3$ und $R_4$ jeweils für einen Halogenrest oder einen Alkoxyrest mit 1 bis 4 C-Atomen oder eine Hydroxylgruppe stehen, mit 30 bis 0,001 Mol-% einer Verbindung (2), dargestellt durch die Formel (II)

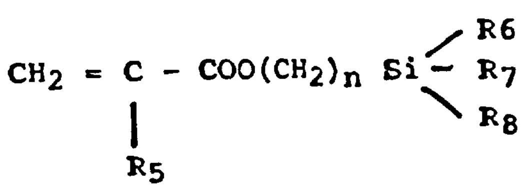

(II)

in welcher $R_5$ ein Wasserstoffatom oder einen Methylrest darstellt, $R_6$, $R_7$ und $R_8$ jeweils für Halogen, OH oder einen Alkoxirest mit 1 bis 4 C-Atomen oder eine aliphatische Kohlenwasserstoffgruppe mit 1 bis 8 C-Atomen stehen und wobei wenigstens einer der Reste $R_6$, $R_7$ oder $R_8$ Halogen, OH oder eine Alkoxygruppe ist und n eine ganze Zahl von 1 bis 6 darstellt.

**2.** Überzugsmittel nach Anspruch 1, dadurch gekennzeichnet, daß das carboxylgruppenhaltige Acrylatcopolymerisat (A) und/oder das epoxidgruppenhaltige Acrylatcopolymerisat (B) hergestellt worden ist unter Verwendung von weniger als 1 Gew.-%, bezogen auf das Gesamtgewicht der zur Herstellung des Copolymerisats (A) bzw. (B) eingesetzten Monomeren, eines oder mehrerer Polysiloxanmakromonomerer a1.

3. Überzugsmittel nach Anspruch 1, dadurch gekennzeichnet, daß das carboxylgruppenhaltige Acrylatcopolymerisat (A) hergestellt worden ist unter Verwendung von 0,05 bis 0,5 Gew.-%, bezogen auf das Gesamtgewicht der zur Herstellung des Copolymerisats (A) eingesetzten Monomeren, eines oder mehrerer Polysiloxanmakromonomerer a1.

4. Überzugsmittel nach einem der Ansprüche 1 bis 3, dadurch gekennzeichnet, daß das Acrylatcopolymerisat (A) eine Säurezahl von 60 bis 120 mg KOH/g und/oder eine Aminzahl von 10 bis 70 mg KOH/g und/oder eine OH-Zahl von 20 bis 90 mg KOH/g aufweist.

5. Überzugsmittel nach einem der Ansprüche 1 bis 4, dadurch gekennzeichnet, daß es als Bindemittel eine Mischung enthält aus

I.) 10 bis 95 Gew.-% mindestens eines carboxylgruppenhaltigen Acrylatcopolymerisats (A) und

II.) 90 bis 5 Gew.-% mindestens eines carboxyl-und aminogruppenhaltigen Polyesters (C) mit einer Säurezahl von 10 bis 160 mg KOH/g, bevorzugt 20 bis 120 mg KOH/g und einer Aminzahl von 0 bis 90, bevorzugt 10 bis 60 mg KOH/g, der erhältlich ist durch Umsetzung von

P1) Polycarbonsäuren oder deren Anhydriden, ggf. zusammen mit Monocarbonsäuren,

P2) Polyolen, ggf. zusammen mit Monoolen, und ggf.

P3) weiteren modifizierenden Komponenten und ggf.

P4) einer mit dem Reaktionsprodukt aus P1, P2 und ggf. P3 reaktionsfähigen Komponente,

mit der Maßgabe, daß das Endprodukt tertiäre Aminogruppen enthält, die aus der Komponente P1 und/oder P2 und/oder P4 stammen, wobei die Summe der Gewichtsanteile der Komponenten (I) und (II) jeweils 100 Gew.-% beträgt.

6. Überzugsmittel nach einem der Ansprüche 1 bis 5, dadurch gekennzeichnet, daß sie als Bindemittel die Komponente A und ggf. die Komponente C sowie als Härter (D) polare Epoxide auf der Basis eines Umsetzungsproduktes von Melaminharzen mit Acrylamid unter anschließender Epoxidierung der Acryl-Doppelbindung enthalten.

7. Verfahren zum Beschichten von Substraten, dadurch gekennzeichnet, daß ein Überzugsmittel nach einem der Ansprüche 1 bis 6 aufgebracht wird.

8. Verwendung der Überzugsmittel nach einem der Ansprüche 1 bis 6 für die Autoreparaturlackierung.

9. Verwendung der Überzugsmittel nach einem der Ansprüche 1 bis 6 als Klar- oder Decklack, insbesondere als Klarlack für die Mehrschichtmetallic Lackierung.

**Claims**

1. Coating agent which comprises, as the binding agent, at least one polymer containing carboxyl groups and, as the hardener, at least one epoxy resin having on average more than one epoxide group per molecule, the total amount of binding agent plus hardener being between 30 and 70 % by weight, based on the total weight of the coating agent, characterized in that the coating agent comprises

A) at least one acrylate copolymer (A) which contains carboxyl groups, has an acid number of 40 to 150 mg of KOH/g and is obtainable by solution polymerization of

$a_1$) 0.05 to 2.5 % by weight of one or more polysiloxane macromonomers $a_1$,
$a_2$) 0 to 40 % by weight of one or more ethylenically unsaturated monomers containing carboxyl groups,

$a_3$) 0 to 40 % by weight of one or more vinylaromatic hydrocarbons,
$a_4$) 0 to 99.95 % by weight of one or more ethylenically unsaturated monomers containing hydroxyl groups,
$a_5$) 0 to 30 % by weight of one or more monomers having at least two polymerizable, ethylenically unsaturated double bonds and
$a_6$) 0 to 80 % by weight of one or more other ethylenically unsaturated copolymerizable monomers,

wherein the sum of the parts by weight of components $a_1$ to $a_6$ is in each case 100 % by weight and wherein the amounts of components $a_2$ and $a_4$ employed should not both simultaneously be zero, and if appropriate this copolymer obtained in the first stage - if it contains hydroxyl groups - has been reacted with carboxylic acid anhydrides, the amount of carboxylic acid anhydrides employed having been chosen so that the copolymer (A) formed has the desired acid number,
and/or
B) at least one acrylate copolymer (B) which contains epoxide groups and is obtainable by solution polymerization of

$e_1$) 0.05 to 2.5 % by weight of one or more polysiloxane macromonomers $a_1$,
$e_2$) 10 to 50 % by weight of one or more ethylenically unsaturated monomers containing epoxide groups,
$e_3$) 0 to 40 % by weight of one or more vinylaromatic hydrocarbons,
$e_4$) 0 to 30 % by weight of one or more monomers having at least two polymerizable, ethylenically unsaturated double bonds and
$e_5$) 0 to 89.95 % by weight of one or more ethylenically unsaturated copolymerizable monomers,

the sum of the parts by weight of components $e_1$ to $e_5$ being in each case 100 % by weight.
C) if appropriate one or more further addition and/or condensation resins containing carboxyl groups and
D) if appropriate one or more further epoxy resins, $a_1$ having a number-average molecular weight of 1000 to 40,000 and on average 0.5 to 2.5 ethylenically unsaturated double bonds per molecule and

- is a compound which can be prepared by reaction of hydroxyl-functional silanes with epichlorohydrin and subsequent reaction of the reaction product with (meth)acrylic acid and/or hydroxyalkyl esters of (meth) acrlyic [sic] acid,

- a polysiloxane macromonomer of the formula

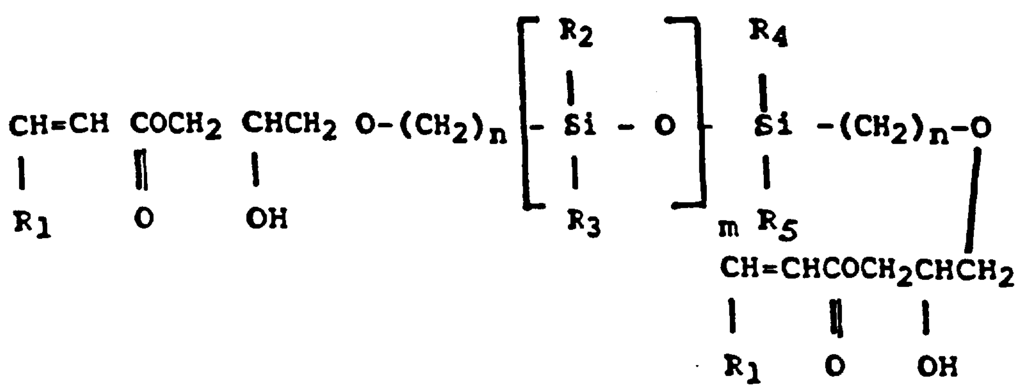

where

| | |
|---|---|
| $R_1$ = | H or $CH_3$ |
| $R_2$, $R_3$, $R_4$ and $R_5$ = | identical or different aliphatic hydrocarbon radicals having 1 to 8 C atoms, n = 2 to 5, m = 8 to 30, or |

- a polysiloxane macromonomer which has been prepared by reaction of 70 to 99.999 mol % of a compound (1) represented by the formula (I)

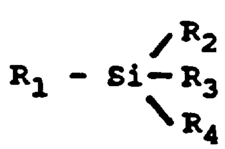

(I)

in which $R_1$ represents an aliphatic hydrocarbon group with 1 to 8 C atoms or a phenyl radical and $R_2$, $R_3$ and $R_4$ in each case represent a halogen radical or an alkoxy radical having 1 to 4 C atoms or a hydroxyl group, with 30 to 0.001 mol % of a compound (2), represented by the formula (II)

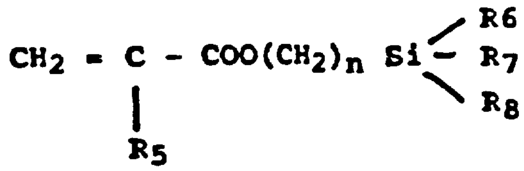

(II)

in which $R_5$ represents a hydrogen atom or a methyl radical, $R_6$, $R_7$ and $R_8$ in each case represent halogen, OH or an alkoxy radical having 1 to 4 C atoms or an aliphatic hydrocarbon group having 1 to 8 C atoms and where at least one of the radicals $R_6$, $R_7$ or $R_8$ is halogen, OH or an alkoxy group, and n represents an integer from 1 to 6.

**2.** Coating agent according to Claim 1, characterized in that the acrylate copolymer (A) containing carboxyl groups and/or the acrylate copolymer (B) containing epoxide groups has been prepared using less than 1 % by weight, based on the total weight of the monomers employed for the preparation of copolymer (A) or (B), of one or more polysiloxane macromonomers al [sic].

**3.** Coating agent according to Claim 1, characterized in that the acrylate copolymer (A) containing carboxyl groups has been prepared using 0.05 to 0.5 % by weight, based on the total weight of the monomers employed for the preparation of copolymer (A), of one or more polysiloxane macromonomers a1 [sic].

**4.** Coating agent according to one of Claims 1 to 3, characterized in that the acrylate copolymer (A) has an acid number of 60 to 120 mg of KOH/g and/or an amine number of 10 to 70 mg of KOH/g and/or an OH number of 20 to 90 mg of KOH/g.

**5.** Coating agent according to one of Claims 1 to 4, characterized in that it comprises, as the binding agent, a mixture of

I.) 10 to 95 % by weight of at least one acrylate copolymer (A) containing carboxyl groups and
II.) 90 to 5 % by weight of at least one polyester (C) which contains carboxyl and amino groups and has an acid number of 10 to 160 mg of KOH/g, preferably 20 to 120 mg of KOH/g, and an amine number of 0 to 90, preferably 10 to 60 mg of KOH/g, and is obtainable by reaction of

P1) polycarboxylic acids or anhydrides thereof, if appropriate together with monocarboxylic acids,
P2) polyols, if appropriate together with monools, and if appropriate
P3) further modifying components, and if appropriate
P4) a component which can react with the reaction product of P1, P2 and if appropriate P3,

with the proviso that the end product contains tertiary amino groups which originate from component P1 and/or P2 and/or P4, the sum of the amounts by weight of components (I) and (II) in each case being 100 % by weight.

**6.** Coating agents according to one of Claims 1 to 5, characterized in that they comprise, as the binding agent, component A and if appropriate component C and, as the hardener (D), polar epoxides based on a reaction product of melamine resins with acrylamide with subsequent epoxidation of the acrylic double bond.

**7.** Process for coating substrates, characterized in that a coating agent according to one of Claims 1 to 6 is applied.

**8.** Use of the coating agents according to one of Claims 1 to 6 for automotive refinishing.

**9.** Use of the coating agents according to one of Claims 1 to 6 as a clearcoat or top coat, in particular as a clearcoat for multilayer metallic painting.

## Revendications

**1.** Agent de revêtement, qui contient en tant que liant au moins un polymère contenant des groupements carboxyles et en tant qu'agent de durcissement au moins une résine époxyde avec en moyenne plus d'un groupement époxyde

par molécule, la quantité totale en liant plus agent de durcissement se situant entre 30 et 70 % en poids, par rapport au poids total de l'agent de revêtement, caractérisé en ce que l'agent de revêtement contient

A) au moins un copolymérisat d'acrylate (A), contenant des groupements carboxyles, ayant un indice d'acidité de 40 à 150 mg de KOH/g, que l'on peut obtenir par polymérisation en solution

$a_1$) de 0,05 à 2,5 % en poids d'un ou de plusieurs macromonomères de polysiloxane $a_1$,

$a_2$) de 0 à 40 % en poids d'un ou de plusieurs monomères éthyléniquement insaturés, contenant des groupements carboxyles,

$a_3$) de 0 à 40 % en poids d'un ou de plusieurs hydrocarbures vinylaromatiques,

$a_4$) de 0 à 99,95 % en poids d'un ou de plusieurs monomères éthyléniquement insaturés, contenant des groupements hydroxyles,

$a_5$) de 0 à 30 % en poids d'un ou de plusieurs monomères ayant au moins deux liaisons doubles polymérisables, éthyléniquement insaturées et

$a_6$) de 0 à 80 % en poids d'un ou de plusieurs monomères copolymérisables éthyléniquement insaturés supplémentaires,

la somme des proportions en poids des composants $a_1$ à $a_6$ étant à chaque fois de 100 % en poids et les quantité d'emploi des composants $a_2$ et $a_4$ ne devant pas être nulles simultanément et, le cas échéant, ce copolymère obtenu dans la première étape - dans le cas où il contient des groupements hydroxyles - ayant subi une réaction avec des anhydrides d'acide carboxylique, la quantité d'anhydrides d'acide carboxylique utilisés étant choisie en sorte que le copolymère (A) qui se forme présente l'indice d'acidité souhaité,
et/ou

B) au moins un copolymérisat d'acrylate (B) contenant des groupements époxydes, que l'on peut obtenir par polymérisation en solution

$e_1$) de 0,05 à 2,5 % en poids d'un ou de plusieurs macromonomères de polysiloxane $a_1$,

$e_2$) de 10 à 50 % en poids d'un ou de plusieurs monomères éthyléniquement insaturés, contenant des groupements époxydes,

$e_3$) de 0 à 40 % en poids d'un ou de plusieurs hydrocarbures vinylaromatiques,

$e_4$) de 0 à 30 % en poids d'un ou de plusieurs monomères ayant au moins deux liaisons doubles polymérisables, éthyléniquement insaturées et

$e_5$) de 0 à 89,95 % en poids d'un ou de plusieurs monomères copolymérisables éthyléniquement insaturés,

la somme des proportions en poids des composants $e_1$ à $e_5$ étant à chaque fois de 100 % en poids,

C) le cas échéant une ou plusieurs résines d'addition et/ou de condensation supplémentaires contenant des groupements carboxyles et

D) le cas échéant, une ou plusieurs résines époxydes supplémentaires,

étant donné que $a_1$ présente un poids moléculaire moyen au nombre de 1 000 à 40 000, contient en moyenne de 0,5 à 2,5 liaisons doubles éthyléniquement insaturées par molécule et $a_1$ étant

- un composé, que l'on peut préparer par une réaction de silanes hydroxyfonctionnels avec l'épichlorhydrine et par une réaction consécutive du produit de réaction avec l'acide (méth)acrylique et/ou des esters hydroxyalkyles de l'acide (méth)acrylique,

- un macromonomère de polysiloxane de formule

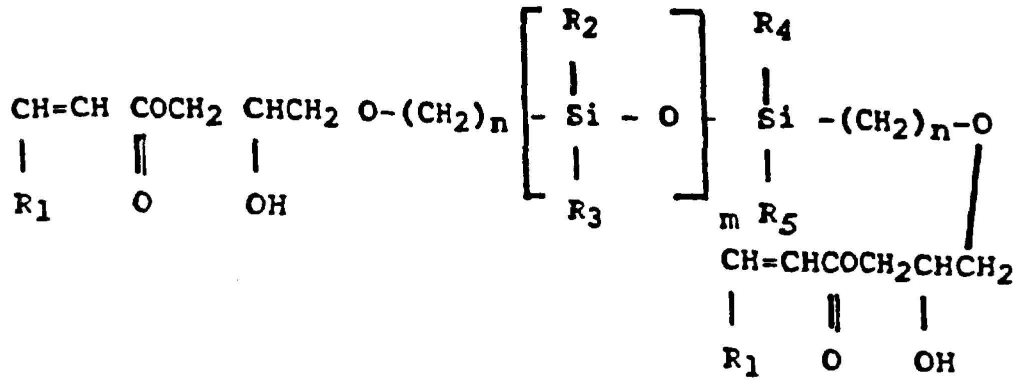

avec
$R_1$ = H ou $CH_3$
$R_2$, $R_3$, $R_4$, $R_5$, = résidus d'hydrocarbure aliphatiques identiques ou différents avec de 1 à 8 atomes de C, n = 2 à 5, m = 8 à 30, ou

- un macromonomère de polysiloxane, qui a été préparé par la réaction de 70 à 99,999 % en moles d'un composé (1), représenté par la formule (I)

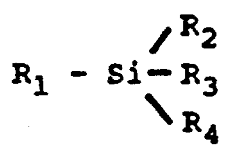

(I)

dans laquelle $R_1$ désigne un groupement d'hydrocarbure aliphatique ayant de 1 à 8 atomes de C ou un résidu phényle, et $R_2$, $R_3$, et $R_4$ représentent à chaque fois un résidu halogène ou un résidu alkoxy ayant de 1 à 4 atomes de C ou un groupement hydroxyle, avec de 30 à 0,001 % en moles d'un composé (2), représenté par la formule (II)

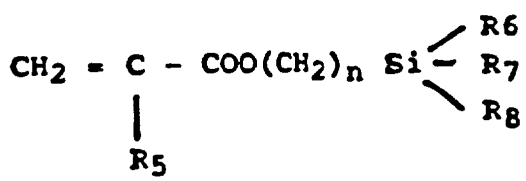

(II)

dans laquelle $R_5$ désigne un atome d'hydrogène ou un résidu méthyle, $R_6$, $R_7$, et $R_8$ représentent à chaque fois un halogène, OH ou un résidu alkoxy ayant de 1 à 4 atomes de C ou un groupement d'hydrocarbure aliphatique ayant de 1 à 8 atomes de C et au moins un des résidus $R_6$, $R_7$, ou $R_8$ étant un halogène, OH ou un groupement alkoxy, et n représentant un nombre entier de 1 à 6.

**2.** Agent de revêtement selon la revendication 1, caractérisé en ce que le copolymérisat d'acrylate (A) contenant des groupements carboxyles et/ou le copolymérisat d'acrylate (B) contenant des groupements époxydes a(ont) été préparé(s) par l'utilisation de moins de 1 % en poids, par rapport au poids total des monomères utilisés pour la préparation du copolymérisat (A), respectivement (B), d'un ou de plusieurs macromonomères de polysiloxane $a_1$.

**3.** Agent de revêtement selon la revendication 1, caractérisé en ce que le copolymérisat d'acrylate (A) contenant des groupements carboxyles a été préparé par l'utilisation de 0,05 à 0,5 % en poids, par rapport au poids total des monomères utilisés pour la préparation du copolymérisat (A), d'un ou de plusieurs macromonomères de polysiloxane $a_1$.

**4.** Agent de revêtement selon l'une quelconque des revendications 1 à 3, caractérisé en ce que le copolymérisat d'acrylate (A) présente un indice d'acidité de 60 à 120 mg de KOH/g et/ou un indice d'amine de 10 à 70 mg de KOH/g et/ou un indice OH de 20 à 90 mg de KOH/g.

**5.** Agent de revêtement selon l'une quelconque des revendications 1 à 4, caractérisé en ce qu'il contient en tant que

liant un mélange

I.) de 10 à 95 % en poids d'au moins un copolymérisat d'acrylate (A) contenant des groupements carboxyles et

II.) de 90 à 5 % en poids d'au moins un polyester (C) contenant des groupements carboxyles et amino, ayant une indice d'acidité de 10 à 160 mg de KOH/g, de préférence de 20 à 120 mg de KOH/g et un indice d'amine de 0 à 90, de préférence de 10 à 60 mg de KOH/g, que l'on peut obtenir par une réaction

P1) d'acides polycarboxyliques ou de leurs anhydrides, le cas échéant, conjointement à des acides monocarboxyliques,

P2) des polyols, le cas échéant conjointement à des monoalcools et, le cas échéant,

P3) de composants modifiants supplémentaires et, le cas échéant,

P4) d'un composant capable de réaction avec le produit de réaction en provenance de P1, de P2 et, le cas échéant, de P3,

avec le proviso que le produit final contient des groupements amino tertiaires, qui proviennent du composant P1 et/ou P2 et/ou P4, la somme des proportions en poids des composants (I) et (II) étant à chaque fois de 100 % en poids.

**6.** Agents de revêtement selon l'une quelconque des revendications 1 à 5, caractérisés en ce qu'ils contiennent en tant que liant le composant A et, le cas échéant, le composant C ainsi qu'en tant qu'agent de durcissement (D) des époxydes polaires à base d'un produit de réaction de résines de mélamine avec l'acrylamide avec une époxydation consécutive de la liaison double acrylique.

**7.** Procédé de revêtement de substrats, caractérisé en ce que l'on procède à l'application d'un agent de revêtement selon l'une quelconque des revendications 1 à 6.

**8.** Utilisation des agents de revêtement selon l'une quelconque des revendications 1 à 6, pour le vernissage de réparation automobile.

**9.** Utilisation des agents de revêtement selon l'une quelconque des revendications 1 à 6 en tant que vernis clair ou vernis de finition, en particulier en tant que vernis clair pour le vernissage métallisé multicouche.